# EUROPEAN PATENT SPECIFICATION

(11) **EP 3 398 305 B1**
(45) Date of publication and mention of the grant of the patent: **27.10.2021**
(21) Application number: 15911740.7
(22) Date of filing: 29.12.2015
(51) Int. Cl.: H04W 48/18, H04W 76/12, H04W 76/11, H04W 4/50, H04W 88/06, H04L 12/917, H04W 4/00

(54) **METHOD AND ARCHITECTURE FOR VIRTUALIZED NETWORK SERVICE PROVISION**
VERFAHREN UND ARCHITEKTUR FÜR VIRTUALISIERTEN NETZWERKDIENST
PROCÉDÉ ET ARCHITECTURE DE PROVISION DE SERVICE DE RÉSEAU VIRTUALISÉ

(43) Date of publication of application: 07.11.2018
(73) Proprietor: Telefonaktiebolaget LM Ericsson (PUBL), 164 83 Stockholm (SE)
(72) Inventor: ZHANG, Shunliang, Beijing 100037 (CN); CAI, Xuejun, S-187 53 (SE); WANG, Jian, Beijing 100085 (CN); LEI, Zhiping, Beijing 100102 (CN); WU, Yi, Beijing 100102 (CN)
(74) Representative: Ericsson
(86) International application number: PCT/CN2015/099506
(87) International publication number: WO 2017/113109

(56) References cited:
- EP-A1- 2 645 803
- WO-A2-2014/052750
- CN-A- 103 997 513
- US-A1- 2011 264 717
- Marouen Mechtri: "Virtual networked infrastructure provisioning in distributed cloud environments", , 1 December 2014 (2014-12-01), pages 1-144, XP055530089, Retrieved from the Internet: URL:https://tel.archives-ouvertes.fr/tel-0 1153260/document [retrieved on 2018-12-04]
- Itu-T: "Framework of network virtualization for future networks Recommendation ITU-T Y.3011", , 1 January 2012 (2012-01-01), pages 1-28, XP055530151, Retrieved from the Internet: URL:https://www.itu.int/rec/T-REC-Y.3011-2 01201-I [retrieved on 2018-12-04]
- T Narten ET AL: "Internet Engineering Task Force (IETF) Problem Statement: Overlays for Network Virtualization", , 1 October 2014 (2014-10-01), pages 1-130, XP055529838, Universités Sorbonne Retrieved from the Internet: URL:https://tools.ietf.org/pdf/rfc7364.pdf [retrieved on 2018-12-04]

## Description

### TECHNICAL FIELD

The non-limiting and exemplary embodiments of the present disclosure generally relate to the communication field, and specifically to a method, an architecture, and a computer program product for sliced network service provision.

### BACKGROUND

This section introduces aspects that may facilitate better understanding of the present disclosure. Accordingly, the statements of this section are to be read in this light and are not to be understood as admissions about what is in the prior art or what is not in the prior art.

As expected by leading operators and vendors in the next generation mobile networks (NGMN) association, diverse applications or services are supposed to be provided by the fifth generation (5G) networks. In addition to supporting the evolution of the established prominent mobile broadband use cases, 5G will support countless emerging use cases with a high variety of applications and variability of their performance attributes: from delay-sensitive video applications to ultra-low latency, from high speed entertainment applications in a vehicle to mobility on demand for connected objects, and from best effort applications to reliable and ultra-reliable ones such as health and safety. Furthermore, use cases will be delivered across a wide range of devices (e.g., smartphone, wearable, Machine-Type Communication (MTC)) and across a fully heterogeneous environment.

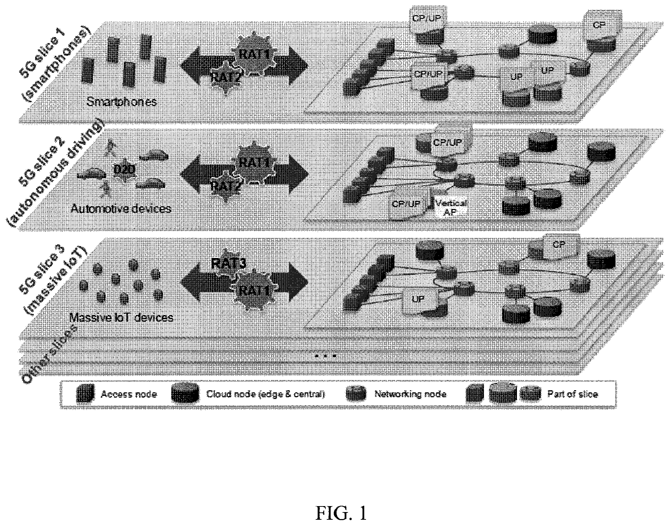

Obviously, different use cases put different requirements to future networks, for example acceptable interruption time, reliability and availability, acceptable latency, data rate, as well as cost per user. It would be difficult or cost impossible to deploy a common network to fulfill such extremely diverse requirements. Accordingly, a new concept of "network slice", namely "5G slice" is proposed, which supports the communication service of a particular connection type in a specific way of handling the Control-plane (C-plane) and User-plane (U-plane) for this service. To this end, a 5G slice is composed of a collection of 5G network functions and specific radio access technology (RAT) settings that are combined together for the specific use case or business model. Thus, a 5G slice can span all domains of the network: software modules running on cloud nodes, specific configurations of the transport network supporting flexible location of functions, a dedicated radio configuration or even a specific RAT, as well as configuration of a 5G device. Not all slices contain the same functions, and some functions that today seem essential for a mobile network might even be missing in some of the slices. The intention of a 5G slice is to provide only the traffic treatment that is necessary for the use case, and avoid all other unnecessary functionality. The flexibility behind the slice concept is a key enabler to both expand existing businesses and create new businesses. Third-party entities can be given permission to control certain aspects of slicing via a suitable Application Program Interface (API), so as to provide tailored services. A specific network slice can be instantiated according to on demand requirements from third party users/ operators and a business policy between network service providers and network service consumers. In order to facilitate understanding of the network slice concept, **FIG. 1** shows sliced network architecture to support diverse 5G network scenarios.

For example, a network slice for typical smartphone use case can be realized by setting fully-fledged functions distributed across the network. Security, reliability and latency will be critical for a network slice supporting automotive use case. For such a slice, all the necessary (and potentially dedicated) functions can be instantiated at the cloud edge node, including the necessary vertical application due to latency constraints. There could be other dedicated slices operating in parallel, as well as a generic slice providing basic best-effort connectivity, to cope with unknown use cases and traffic.

At the same time, inspired by the great success of could technology in information technology (IT) world, the telecom industry is considering providing cloud based network service by Network Functions Virtualization (NFV) initiative at European Telecommunication Standards Institute (ETSI). NFV will transform the way that networks are built and operated by leveraging the standard IT virtualization technology and consolidating network equipment types into "industry standard" servers, switches and storage, which may be located in Data Centers (DCs). The NFV technology will make it more flexible and efficient to provide and operate virtual mobile network services, as well as value added services with low Capital expenditures (CAPEX), low Operating Expenses (OPEX) and reduced time.

With the quick development of cloud computing and NFV technology, it can be expected that more and more 5G network services will be provided in a cloud environment in the form of various network slices.

WO 2014/052750 A1 describes systems, methods, and instrumentalities such that a wireless transmit/receive unit (WTRU) may obtain network operator agnostic wireless access for a service.

Marouen Mechtri, "Virtual networked infrastructure provisioning in distributed cloud environments" (URL https://tel.archives-ouvertes.fr/tel-01153260/document), discusses the problem of virtual networked infrastructures provisioning over distributed clouds.

Itu-T, "Framework of network virtualization for future networks Recommendation ITU-T Y.3011" (URL https://www.itu.int/rec/T-REC-Y.3011-201201-I), describes the framework of network virtualization for future networks (FNs).

T Narten ET AL, "Internet Engineering Task Force (IETF) Problem Statement: Overlays for Network Virtualization" (URL: https://tools.ietf.org/pdf/rfc7364.pdf), describes overlays for network virtualization.

### SUMMARY

Aspects or embodiments of the invention relate to a method according to independent claim 1, an architecture according to independent claim 8 and a computer program product according to independent claim 9. Some advantageous embodiments are defined by dependent claims 2 to 7. Certain examples listed below are provided to assist in understanding in the claimed invention.

Various embodiments of the present disclosure aim to provide an efficient solution for service provision in a network slicing environment for 5G networks. Other features and advantages of embodiments of the present disclosure will also be understood from the following description of specific embodiments when read in conjunction with the accompanying drawings, which illustrate the principles of embodiments of the present disclosure.

In a first example, there is provided a method for service provision at a network element in a radio access network associated with a core network comprising a plurality of network slices. The method comprises obtaining information related to one or more network slices of the core network from another network element and then facilitating service provision via the core network to a terminal device under coverage of the radio access network by informing the terminal device of information that is based at least on the obtained information.

The information related to the one or more network slices may be obtained in response to receipt of a request message from the terminal device for requesting a service. The information related to the one or more network slices may comprise at least requirement information indicative of a requirement on the one or more network slices of a third party service provider for providing the requested service to the terminal device. Facilitating service provision via the core network to the terminal device may be realized by selecting a network slice from the one or more network slices for the terminal device based at least on the requirement information of the third party service provider and then informing the terminal device of the selected network slice. Thereby, requirements of third party service providers may be considered when selecting a network slice for service provision to a terminal device so that a back-end business model can be efficiently applied in a core network slicing environment.

The requirement information of the third party service provider may comprise at least one of: an identifier of a required network slice; a type of the required network slice; an identifier of a preferred network slice; and a type of the preferred network slice.

The requirement information of the third party service provider may further comprise any of the following: information on a condition to apply the required or preferred network slice; information on a sponsor of the required or preferred network slice; a list of identifiers of terminal devices that are permitted to access the required or preferred network slice; and description of traffic or service to be carried by the required or preferred network slice.

The network element may be a network function for selecting a network slice in the control plane of the radio access network, while the other network element may be a service capability exposure function, SCEF or a network function in the control plane of a connected network slice of the core network. In the latter case, the information related to the one or more network slices may be received by the network function in the control plane of the core network from the SCEF.

The obtained information related to the one or more network slices may comprise at least one of the following: information on identifiers of connected network slices of the core network; and information on types of the connected network slices of the core network.

Facilitating service provision via the core network to the terminal device may be realized by broadcasting the obtained information to the terminal device as at least a part of system information so that the terminal device can select a preferred network slice based at least on the obtained information. Thereby, terminal devices under coverage of the radio access network can have knowledge of available network slices before making a selection. The selection is thus more appropriate and effective.

Obtaining the information related to the one or more network slices may further comprise storing the information related to the one or more network slices and updating the stored information in response to a change in the connected network slices. The change in the connected network slices may comprise termination of a connection between the radio access network and one of the connected network slices, establishment of a new connection between the radio access network and a new network slice, or a change in the connected network slice itself, e.g. its usage or condition.

The network element may be a base station in the radio access network, while the other network element may be a network function in the control plane of each of the connected network slices of the core network or an operations support system/ business support system, OSS/BSS associated with the core network.

The obtained information related to the one or more network slices may comprise a traffic steering policy generated at the other network element.

Facilitating service provision via the core network to the terminal device may be realized by forwarding the obtained information transparently to the terminal device.

The traffic steering policy may be generated at the other network element based on at least one of the following: a network slice status from an operations support system/business support system, OSS/BSS associated with the core network; a traffic steering policy of a network operator for the core network; requirement information on one or more network slices of a third party service provider for the terminal device; and information related to the terminal device. The other network element may be an access network discovery and selection function, ANDSF, in the control plane of the core network.

Thereby, it is possible for terminal devices to make a more flexible selection of network slices in a dynamic way by considering both operator's policy and third party service provider's requirements as well as their own preferences.

In a second example, there is provided a method at a network element for service capability exposure, for example SCEF. The method comprises collecting status and capability information on one or more network slices of a core network that comprises a plurality of network slices and is associated with a radio access network. Then based on the collected status and capability information, sliced network service information is determined and exposed to an application function, AF operated by a third party service provider for providing a service to a terminal device via the radio access network.

The method may further comprise obtaining requirement information on a requirement for one or more network slices of the third party service provider from the application function that generates the requirement based at least on the sliced network service information and then transmitting the requirement information to a network element in the radio access network so as to facilitate selection of a network slice in the radio access network for the terminal device.

The method may further comprise performing admission control for the requirement from the application function and rejecting the requirement if the admission control for that requirement fails, while accepting the requirement if the admission control for that requirement succeeds.

In a third example, there is provided a method at a network element, e.g. ANDSF, in a core network comprising a plurality of network slices. The core network is associated with a radio access network. The method comprises collecting assistance information for network slice selection from surrounding functions and generating a traffic steering policy based at least on the assistance information. The method further comprises providing the traffic steering policy to a terminal device under coverage of the radio access network so that the terminal device can select a network slice of the core network based at least on the traffic steering policy for service provision via the selected network slice and the associated radio access network.

The assistance information may be collected by at least one of: collecting from an OSS/BSS associated with the core network at least one of the following: an identifier, a type, an instantiation status, a load status of each of the network slices of the core network, and a network slice selection strategy of a network operator for the core network; collecting preference information from application functions operated by a third party service provider for providing a service to the terminal device; collecting network slice related subscription information from a subscription database in the core network; and collecting user related information from the terminal device.

The generated traffic steering policy may comprise at least one of the following: an identifier of a preferred network slice and a type of the preferred network slice. Additionally, the generated traffic steering policy may further comprise any of the following: a list of identifiers of preferred network slices; a list of types of the preferred network slices; a priority indication associated with each of the preferred network slices; description information on a type of traffic or service carried by each of the preferred network slices; and a validity condition of the traffic steering policy.

In a fourth example, there is provided an apparatus for service provision at a network element in a radio access network associated with a core network comprising a plurality of network slices. The apparatus comprises an information obtaining unit configured to obtain information related to one or more network slices of the core network from another network element and a service provision facilitating unit configured to facilitate service provision via the core network to a terminal device under coverage of the radio access network by informing the terminal device of information that is based at least on the obtained information.

The information obtaining unit may be configured to obtain the information related to the one or more network slices in response to receipt of a request message from the terminal device for requesting a service. The information related to the one or more network slices may comprise at least requirement information indicative of a requirement on the one or more network slices of a third party service provider for providing the requested service to the terminal device. The service provision facilitating unit may be configured to select a network slice from the one or more network slices for the terminal device based at least on the requirement information of the third party service provider and to inform the terminal device of the selected network slice.

The obtained information related to the one or more network slices may comprise at least one of the following: information on identifiers of connected network slices of the core network; and information on types of the connected network slices of the core network. The service provision facilitating unit may be configured to broadcast the obtained information to the terminal device as at least a part of system information so that the terminal device can select a preferred network slice based at least on the obtained information.

The obtained information related to the one or more network slices may comprise a traffic steering policy generated at the other network element. The service provision facilitating unit may be configured to forward the obtained information transparently to the terminal device.

In a fifth example, there is provided an apparatus at a network element for service capability exposure, e.g. SCEF. The apparatus comprises a collecting unit configured to collect status and capability information on one or more network slices of a core network that comprises a plurality of network slices and is associated with a radio access network and a determining unit configured to determine sliced network service information based on the collected status and capability information. The apparatus further comprises an exposing unit configured to expose the sliced network service information to application functions operated by a third party service provider for providing a service to a terminal device under via the radio access network.

In a sixth example, there is provided an apparatus at a network element in a core network that comprises a plurality of network slices and is associated with a radio access network. The apparatus comprises a collecting unit configured to collect assistance information for network slice selection from surrounding functions and a generating unit configured to generate a traffic steering policy based at least on the assistance information. The apparatus further comprises a providing unit configured to generate the traffic steering policy to a terminal device via the radio access network so that the terminal device can select a network slice of the core network based at least on the traffic steering policy.

It shall be appreciated that various examples of the first, second and third examples may also be equally applied to the fourth, fifth and sixth examples.

### BRIEF DESCRIPTION OF THE DRAWINGS

The above and other aspects, features, and benefits of various embodiments of the present disclosure will become more fully apparent from the following detailed description with reference to the accompanying drawings, in which:
**FIG. 1** shows sliced network architecture to support diverse 5G network scenarios;
**FIG. 2** shows architecture illustrating the first solution for service provision via a network slice according to some embodiments of the present disclosure;
**FIG. 3** shows an interactive message flow of a specific example for the first solution according to one embodiment of the present disclosure where the requirement information of the third party service provider is obtained directly from an SCEF;
**FIG. 4** shows an interactive message flow of another example for the first solution according to another embodiment of the present disclosure where the requirement information of the third party service provider is obtained from a PRCF of a connected network slice;
**FIG. 5** illustrates a flowchart of a method 500 performed at a network function for service capability exposure according to an embodiment of the present disclosure;
**FIG. 6** shows an interactive message flow of a specific example for the method 500 performed at SCEF according to one embodiment of the present disclosure;
**FIG. 7** shows architecture illustrating the second solution for distributing network slice information;
**FIG. 8** shows an interactive message flow of a specific example for the second solution where network slice related information is obtained from each connected core network slice;
**FIG. 9** shows an interactive message flow of a specific example for the second solution where network slice related information is obtained from an OSS/ BSS;
**FIG. 10** shows an existing ANDSF system for assisting network selection and traffic or service distribution over different access networks in the context of both 3GPP access and non-3GPP access;
**FIG. 11** shows architecture illustrating the third solution for traffic steering;
**FIG. 12** illustrates a flowchart of a method 1200 performed at a network function in the core network, e.g. ANDSF or a similar network function in the core network C-plane;
**FIG. 13** shows an interactive message flow of a specific example for the third solution;
**FIG. 14** illustrates a flowchart of a method 1400 for service provision at a network element in a radio access network associated with a core network comprising a plurality of network slices according to some embodiments of the present disclosure;
**FIG. 15** illustrates a schematic block diagram of an apparatus 1500 adapted for service provision at a network element in a radio access network associated with a core network comprising a plurality of network slices according to some embodiments of the present disclosure;
**FIG. 16** illustrates a schematic block diagram of an apparatus 1600 at a network element for service capability exposure, e.g. SCEF, according to some embodiments of the present disclosure;
**FIG. 17** illustrates a schematic block diagram of an apparatus 1700 at a network element, e.g. ANDSF, in a core network comprising a plurality of network slices; and
**FIG. 18** illustrates a schematic block diagram of an apparatus 1800 according to embodiments of the present disclosure.

Like reference numbers and designations in the various drawings indicate like elements.

### DETAILED DESCRIPTION

Hereinafter, the principle of the present disclosure will be described with reference to illustrative embodiments. It should be understood, all these embodiments are given merely for one skilled in the art to better understand and further practice the present disclosure, but not for limiting the scope of the present disclosure as defined by the appended claims. For example, features illustrated or described as part of one embodiment may be used with another embodiment to yield still a further embodiment. In the interest of clarity, not all features of an actual implementation are described in this specification.

References in the specification to "an embodiment," "another embodiment," "yet another embodiment," etc. indicate that the embodiment described may include a particular feature, structure, or characteristic, but every embodiment may not necessarily include the particular feature, structure, or characteristic. Moreover, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that, although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/ or" includes any and all combinations of one or more of the listed terms in association.

The terminology used herein is for the purpose of describing particular embodiments only and is not intended to limit the embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs. For example, the term "base station" used herein may also be referred to as eNB, eNodeB, NodeB or base transceiver station (BTS), Access Node (AN) or Access Point (AP) etc. depending on the technology and terminology used. The term "network element" used herein may refer to a network function, regardless of whether it is virtual or not. The term "terminal device" or "UE" used herein may refer to any terminal having wireless communications capabilities, including but not limited to, mobile phones, cellular phones, smart phones, or personal digital assistants (PDAs), portable computers, image capture devices such as digital cameras, gaming devices, music storage and playback appliances and any portable units or terminals that have wireless communications capabilities, Internet appliances permitting wireless Internet access and browsing, or sensing devices or other machine type devices and the like. The terms "terminal device" and "UE" may be used interchangeably in this document.

As introduced in the Background section, it can be expected that 5G network services will be provided over cloud infrastructure. In a cloud environment, it is highly possible that a specific network slice is dynamically instantiated or terminated, or scaled out or in to support a flexible business model and efficient resource utilization. It is natural that a specific type of network slice is available in one area at a certain time, while it may not be available at a different time or at a different area. A specific network slice may be initiated based on requirements from a UE or from a 3^{rd} party Over the Top (OTT) service provider (SP), or it may be initiated actively by network operators. In the case that more than one network slice may be available, how to select an appropriate network slice to serve the UE requesting a specific service becomes an issue. Given that more and more 3^{rd} party OTT SPs from other industries may be involved in the ecosystem in the 5G Era, how to consider preferences and/ or requirements from the 3^{rd} party OTT SPs during provision of a specific network slice forms a further issue. Traditionally, the network service provided to a UE is charged against the UE, which may be referred to as a front-end business model. The limitation of this business model is marginalizing telecom network operators in the mobile internet ecosystem. In the 5G Era, a more diverse and flexible business model should be possible, as advocated by NGMN For instance, a back-end business model, as already widely adopted by Internet players, is most promising and efficient. In such a model, revenues from the 3^{rd} party players are involved in the end to end service provision over network slices.

For example, from the perspective of a 3^{rd} party OTT SP, there are various types of users, some of which are categorized as VIP users and others may be categorized as low end users, and then a same OTT service may be delivered via different alternative network slices. For VIP users, the OTT service provider would expect the most ideal network slice to be used. For non-VIP users, the 3^{rd} party OTT service provider would expect a default network slice to be used due to cost or other considerations. If the requirement from the OTT service provider is not taken into account during the service provision via the network slice, it would be problematic when the back-end business model is employed. For example, in the case that a network slice is initiated from the 3^{rd} party OTT service provider to serve its VIP users, while the traffic for another normal user is also steered to that network slice as requested by the normal user, then user experience of the VIP users may be negatively impacted, and then it would be problematic in the back-end business model when charging from the 3^{rd} party OTT service provider. As another example, at a certain situation, a user group of the 3^{rd} party OTT service provider may not be big enough to initiate a dedicated and ideal network slice for an OTT application. Thus, the traffic of the OTT application needs to be conveyed on an existing non-ideal network slice. In this case, if the ideal network slice is selected just based on the user's preference without considering the requirement of the 3^{rd} party OTT service provider, it would also be problematic in the back-end business model when charging from the 3^{rd} party OTT service provider.

The existing solutions for network slice selection may resolve an issue of how to determine an appropriate network slice for a UE based on user's requirement or preference. However, the preference or requirement from the 3^{rd} party OTT service provider is not considered. Therefore, the existing solutions may work well for the traditional front-end business model, i.e. service provision via a network slice is charged against users, but not be appropriate for the back-end business model, i.e. the service provision via the network slice is charged against the 3^{rd} party OTT service provider.

Some of the following embodiments of the present disclosure propose a solution (which will be referred to as a first solution hereafter) for service provision via a network slice (hereafter any reference to a network slice refers to a core network slice), which may be applicable to the back-end business model.

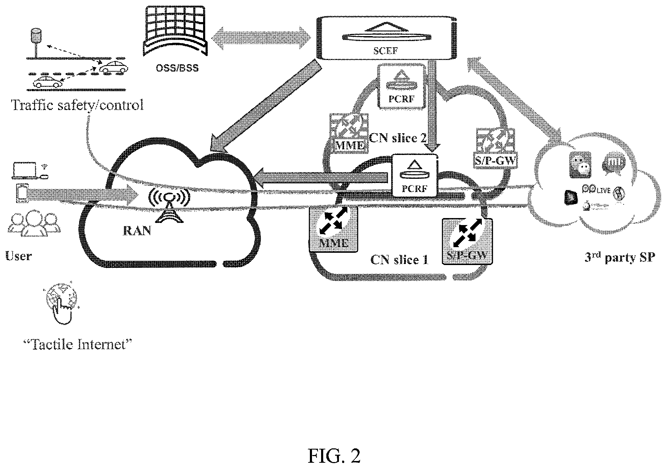

**FIG. 2** shows architecture illustrating the first solution for service provision via a network slice according to some embodiments of the present disclosure.

In this figure, there is illustrated a radio access network (RAN) and a core network associated with the RAN. The core network comprises a plurality of network slices, although only two slices (i.e. CN slice 1 and CN slice 2) are shown only for a purpose of illustration. In other words, it means that a network operator for the core network supports the plurality of network slices. Each of the network slices may comprise its own network elements or functions, like Mobility Management Entity (MME) and Policy and Charging Rules Function (PCRF). A terminal device can access the RAN and thereby be served by a selected one of the network slices of the core network. The term "associated" used herein for "the core network associated with the RAN" means that the RAN and the core network can collaborate to provide services to a terminal device under coverage of the RAN, and the terminal device can establish a connection with a network slice of the core network via the RAN. The core network and the RAN may or may not be operated by the same network operator.

In the first solution as illustrated, a network element in the RAN can obtain information related to one or more network slices of the core network from another network element in response to receipt of a request message from a terminal device under coverage of the RAN for requesting a service. For example, the request message may be a connection establishment request. The network element in the RAN is a network function for selecting a network slice (which may be referred to as Network Slice Selection Function (NSSF) somewhere) in the control plane (C-plane) of the RAN (which may be simplified as "RAN C-plane" hereafter). This network function for selecting a network slice may be part of a base station in the RAN, or may alternatively be a network function independent of the base station or located separately therefrom in the RAN.

The other network element from which the information is obtained is a network function for service capability exposure, e.g. a Service Capability Exposure Function (SCEF). An example of the other network element is a network function in the C-plane of a core network slice (which may be simplified as "CN C-plane network function") that is already connected to the RAN, e.g. a Policy and Charging Rules Function (PCRF), which may receive requirement information of a third party SP from the SCEF.

Particularly, the request message from the terminal device may comprise information on a requested service, e.g. an identifier (ID) of the requested service or a type of the requested service, such as high security or delay-sensitive traffic. When the terminal device has knowledge of available network slices, the request message may also comprise information on a preferred network slice, e.g. an ID of the preferred network slice or a type of the preferred network slice, such as for providing high security or low delay. Optionally, the request message from the terminal device may further comprise any of the following: an ID or type of the terminal device and an ID or type of a third party service provider who may be able to provide the requested service.

The obtained information related to the one or more network slices comprises at least requirement information indicative of a requirement on the one or more network slices of a third party service provider for providing the requested service to the terminal device.

For example, the requirement information of the third party service provider may comprise at least one of: an ID of a required network slice; a type of the required network slice; an ID of a preferred network slice; and a type of the preferred network slice.

Besides, the requirement information of the third party service provider may further comprise any of the following: information on a condition (e.g. time, area, RAT, roaming status of the terminal device) to apply the required or preferred network slice; information on a sponsor of the required or preferred network slice, e.g. a third party service provider; a list of IDs of terminal devices that are permitted to access the required or preferred network slice; and description of traffic or service to be carried by the required or preferred network slice.

Then the network element in the RAN selects a network slice from the one or more network slices for the terminal device based at least on the requirement information of the third party service provider. This selection may be based further on a preference of the terminal device for the network slices when the request message includes the related information, the type of the service requested by the terminal device and/ or a strategy or policy of the network operator for mapping between an application traffic or service type and the network slice ID or type.

Once the network element in the RAN has selected the network slice, it informs the terminal device of the selected network slice for service provision.

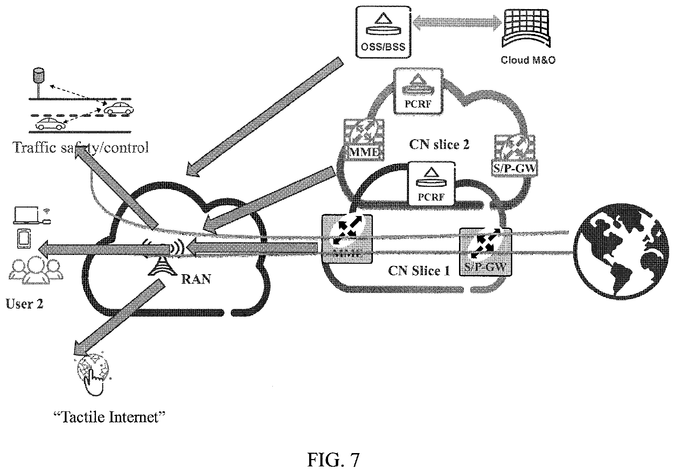

Please note that, if there is no 3^{rd} party service provider involved or the front-end business model is used, the terminal device can still access the RAN and thereby be served by a selected one of the network slices of the core network in the illustrated architecture. However, in this case, the serving network slice may be selected by the terminal device itself, for example based on a preference or requirement of the terminal device and/ or a strategy or policy of the network operator, which will be detailed later with reference to FIGs. 7-13.

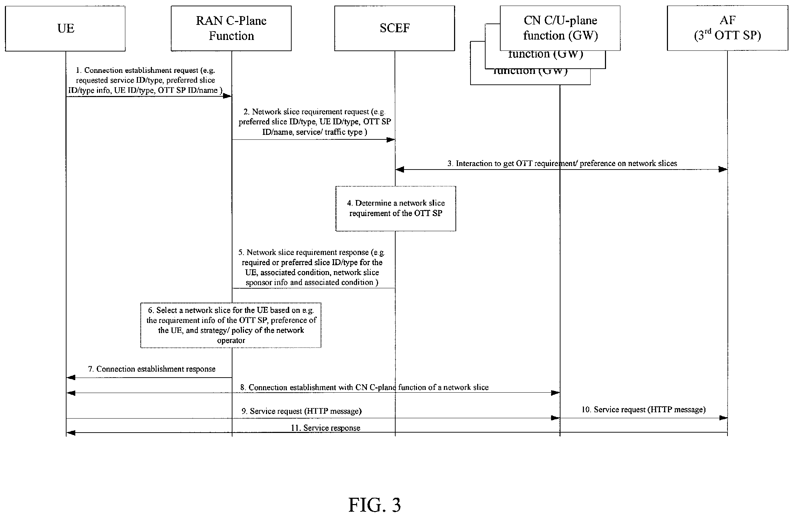

**FIG. 3** shows an interactive message flow of a specific example for the first solution according to one embodiment of the present invention where the requirement information of the third party SP is obtained directly from the SCEF.

As illustrated, the UE initiates, at step 1, connection establishment by sending a request message to a network function in the RAN C-plane, such as a base station. The request message may include UE related information, such as a UE preferred network slice ID and/ or type, UE ID and/ or type, UE requested service type, and a possible third party OTT SP ID and/ or name for providing the requested service. Generally, for a legacy UE, the request message may not include preferred network slice ID or type.

In response to receipt of the request message, a network function for selecting a network slice collocated with the network element in the RAN C-plane consults, at step 2, the SCEF by sending a request message, which may include the UE related info like UE ID, UE type, UE preferred network slice ID and/ or type, UE requested service type, the third party OTT SP ID and/ or name etc..

Upon reception of the request message from the RAN, the SCEF may interact with application functions operated by the third party OTT SP at step 3 to get requirement information on a requirement of the third party OTT SP for one or more network slices, if the requirement information is not available locally at the SCEF.

Then the SCEF may determine the requirement of the third party OTT SP at step 4 and may translate that requirement to an internal network resource requirement, for example to a specific network slice ID number and/ or a specific network slice type.

Afterwards, the SCEF replies with a response message to the network function located in the RAN C-plane to provide the requirement information of the third party OTT SP at step 5. The response message may include a required or preferred slice ID and/ or type, an associated condition, e.g. RAT, service time, location of the required or preferred slice, network slice sponsor information and associated condition (e.g. service time, location) of the sponsor, a list of IDs of UEs allowed to access the required or preferred network slice.

At step 6, the network function for selecting a network slice collocated in the RAN C-plane selects a specific network slice for the UE based on the OTT SP's requirement information as provided from the SCEF, user related information as reported by the UE, as well as a policy or strategy of the network operator on mapping between the application traffic or service type and the network slice ID or type. For example, if a specific network slice ID or type is reported by the UE, it will be considered as an input for final network slice selection. Otherwise, if no network slice ID or type is reported by the UE, the UE requested service type may be considered instead as an input for the final network slice selection.

Then at step 7, the network element in the RAN C-plane like the base station collocated with the network function for selecting the network slice may reply with a response message to the UE to confirm whether the connection is established successfully or not.

Afterwards, the UE can initiate, at step 8, a connection establishment process to the selected network slice via a non-access stadium (NAS) signaling process. Related bearers or tunnels to convey application layer traffic are established during the process.

Through the bearers or tunnels established between the UE and the selected network slice, the UE sends, at step 10, a service request, such as a HTTP (Hyper Text Transport Protocol) request towards an application server hosting the application functions.

At step 11, the application server replies with an application layer response message. Then, the requested service is provided to the UE from the OTT SP.

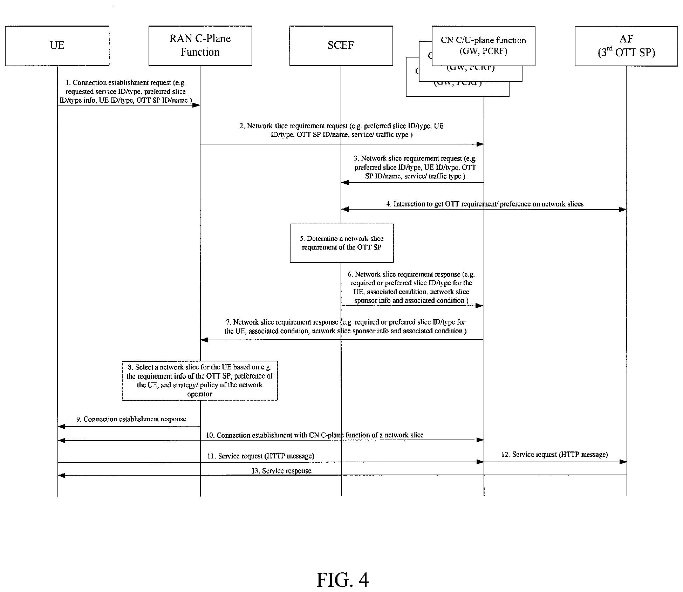

**FIG. 4** shows an interactive message flow of another example for the first solution according to another embodiment of the present disclosure where the requirement information of the third party OTT SP is obtained from the PRCF of a connected network slice.

As illustrated, the UE initiates, at step 1, connection establishment by sending a request message to a network element in the RAN C-plane, such as a base station. The request message may include UE related information, such as a UE preferred network slice ID and/ or type, UE ID and/ or UE type, UE requested service type, and a possible third party OTT service provider ID and/ or name for providing the requested service. Generally, for a legacy UE, the request message may not include the preferred network slice ID or type.

In response to receipt of the request message, a network function for selecting a network slice collocated with the network element in the RAN C-plane consults, at step 2, the core network by sending a request message to a network function, e.g. MME, in the C-plane of a default network slice of the core network that is connected to the RAN. This request message may include the UE related information like the UE ID, UE type, UE preferred network slice ID and/ or type, UE requested service type, the third party OTT SP ID and/ or name.

This network function in the C-plane of the default network slice may forward the information included in the request message received from the RAN to the SCEF via a request message at step 3. This request message may be relayed by another network function in the core network, such as a gateway (GW).

Upon reception of the request message from the default network slice, the SCEF may interact with application functions operated by the third party OTT SP at step 4 to get requirement information on a requirement of the OTT SP for one or more network slices, if the requirement information is not available locally at the SCEF.

Then the SCEF may determine the requirement of the OTT SP at step 5 and translates that requirement to an internal network resource requirement, for example to a specific network slice ID number and/ or a specific network slice type.

Afterwards, the SCEF sends a response message to a network function, e.g. PCRF, located in the C-plane of the default CN network slice as a reply to provide the requirement information of the OTT SP at step 6. The response message includes a required or preferred slice ID and/ or type, an associated condition, e.g. RAT, time, location of the required or preferred slice, network slice sponsor information and associated condition (e.g. time, location), a list of IDs of UEs allowed to access the required or preferred network slice.

At step 7, the network function in the default CN network slice forwards the requirement information received from the SCEF to the network element in the RAN C-plane by a response message.

At step 8, the network function for selecting a network slice collocated in the RAN C-plane may select a specific network slice for the UE based on the OTT service provider's requirement information as provided from the SCEF, user related information as reported by the UE, as well as a policy or strategy of the network operator on mapping between application traffic or service type and network slice ID or type. For example, if a specific network slice ID or type is reported by the UE, it will be considered as an input for final network slice selection. Otherwise, if no network slice ID or type is reported by the UE, the UE requested service type may be considered instead as an input for the final network slice selection.

The following steps 9-13 are the same as steps 7-11 in **FIG. 3****,** which thus will not be repeated for the purpose of simplicity.

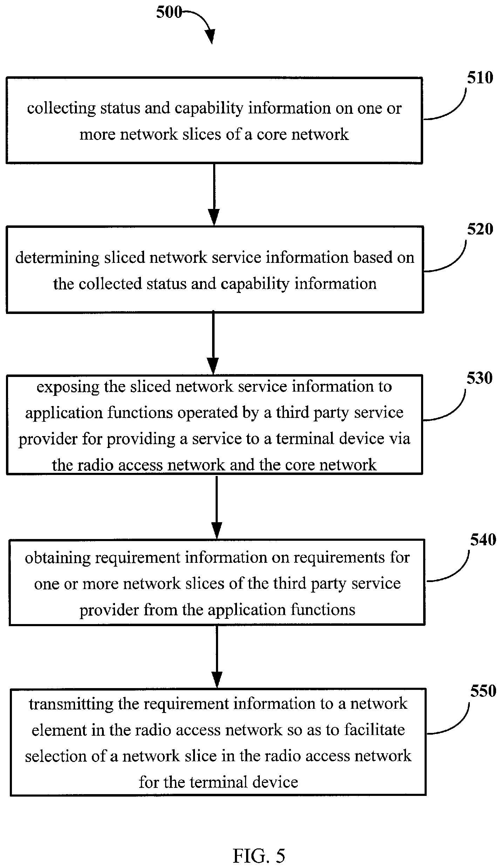

In the first solution as illustrated in **FIG. 2****,** the network function for service capability exposure, e.g. SCEF, plays a key role of collecting requirement information from the third party OTT SP. In the following, the operation of such a network function for service capability exposure will be detailed with further reference to **FIG. 5. FIG. 5** illustrates a flowchart of a method 500 performed at this network function according to an embodiment of the present disclosure, for exposing network service information and obtaining requirement information of the third party service provider, for example. The network function for service capability exposure is an SCEF. For ease of description, the network function for service capability exposure will be exemplarily represented by an SCEF in the following description. Please also note that the embodiment illustrated in **FIG. 5** is based on the architecture of **FIG. 2****.** Therefore, the core network, the radio network and the terminal device mentioned in relation to method 500 of **FIG. 5** has the same correspondence as those in **FIG. 2****.**

As illustrated in **FIG. 5****,** the method 500 enters at block 510, in which the SCEF collects status and capability information on one or more network slices of the core network. As introduced above with reference to **FIG. 2****,** the core network comprises a plurality of network slices and is associated with the radio access network.

In various embodiments, the status and capability information may be collected from surrounding functions, like the OSS/ BSS associated with the core network and/ or a network function in the C-plane of each active network slice. The term "active" used herein means that the corresponding network slice is already instantiated and currently in operation.

For example, the SCEF may collect, from the OSS/ BSS, information on all network slices or services supported by the network operator for the core network, including but not limited to, types and/ or identifiers of the supported services or network slices.

Alternatively or additionally, the SCEF may collect information on active network slices from the OSS/ BSS or from a network function in the C-plane of each active network slice, including but not limited to types and/ or identifiers of the active network slices.

Optionally, information on a load status, including C-plane load and U-plane load, of each active network slice may be collected from the OSS/ BSS or from the network function in the C-plane of each active network slice.

Then at block 520, the SCEF determines sliced network service information based on the collected status and capability information and then exposes, at block 530, the sliced network service information to an application function(s) operated by a third party service provider for providing a service to a terminal device via the radio access network, which means the terminal device is under coverage of the radio access network. For example, the sliced network service information may be conveyed to the application function(s) via an existing Application Programming Interface (API) or an interface between the SCEF and the application function so as to be exposed.

In various embodiments, the sliced network service information may comprise a list of IDs and/ or types of network slices supported by the network operator for the core network, available conditions (e.g. available areas or time) of the network slices, an ID of a Public Land Mobile Network (PLMN) associated with the network slices, and/ or characteristics of the network slices.

Alternatively or additionally, the sliced network service information may comprise a list of IDs and/ or types of active network slices, available conditions (e.g. available areas or time) of the active network slices, an ID of the PLMN associated with the active network slices, and/ or characteristics of the active network slices.

Optionally, the sliced network service information may further comprise information on a load status, including C-plane load and U-plane load, of each active network slice.

Once the sliced network service information is exposed to the application function(s), the application function(s) can generate a respective requirement for one or more network slices of the core network based on the sliced network service information and optionally further on service and business requirements of the third party service provider. The collection of these requirements of various application functions represents the requirement for the network slices of the third party service provider.

Accordingly, in an embodiment, the method 500 further comprises obtaining, at block 540, requirement information on a requirement for one or more network slices of the third party service provider from the application function that generates the requirement based at least on the sliced network service information. For example, the requirement information is conveyed from the application functions to the SCEF via the existing API or the interface between the SCEF and the application functions.

As described above, the requirement information of the third party service provider may comprise at least one of: an ID of a required network slice; a type of the required network slice; an ID of a preferred network slice; and a type of the preferred network slice.

Besides, the requirement information of the third party service provider may further comprise, but not limited to, any of the following: information on a condition (e.g. time, area, RAT, roaming status of the terminal device) to apply the required or preferred network slice; information on a sponsor of the required or preferred network slice, e.g. the network operator or a third party service provider; a list of IDs of terminal devices that are permitted to access the required or preferred network slice; and description of traffic or service to be carried by the required or preferred network slice.

Then, the SCEF transmits, at block 550, the requirement information of the third party service provider to a network element in a radio access network so as to facilitate selection of a network slice in the radio access network for the terminal device.

Additionally, upon reception of the requirement information, the SCEF may also perform admission control of the requirement from the application function and accordingly reject the requirement if the admission control of that requirement fails or accept the requirement if the admission control of that requirement succeeds, for example by scheduling network resources to fulfill the corresponding requirement through interaction with a network function in the C-plane of the required network slice and/ or with the OSS/ BSS.

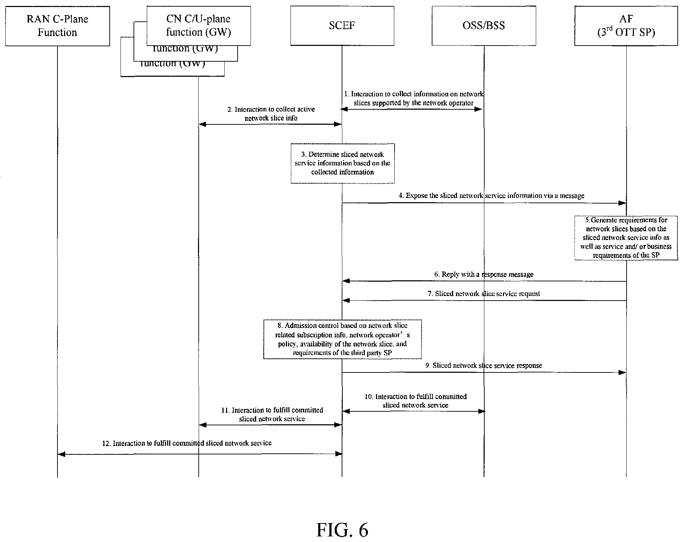

**FIG.** 6 shows an interactive message flow of a specific example for the method 500 performed at SCEF according to one embodiment of the present disclosure.

As illustrated, at step 1, the SCEF interacts with the OSS/BSS associated with the core network to collect information about all network slices supported by the network operator for the core network. The information may include IDs or types of the network slices, description of each type of the network slice, and availability of each type of the network slice.

In order to trace the status of each active network slice, the SCEF may also interact with the C-plane function of each active network slice to collect information about all active network slices. The information may include IDs or types of the active network slices, and a load status (e.g. C-plane load and U-plane load) of each active network slice at step 2. Please note that step 2 may be performed before step 1 or in parallel with step 1.

At step 3, based on the information collected from the surrounding functions and a policy of the network operator, the SCEF determines sliced network service information that may be exposed to the third party OTT service provider.

At step 4, the SCEF may actively expose the sliced network service information to the AF of the third party service provider via a message or reactively expose the sliced network service information to the AF as a response to receipt of a request message from the AF for requesting the sliced network service information. The request message may include any of the following information: a list of IDs or types of the network slices supported by the network operator, available conditions (e.g. available areas or time) of the network slices, an ID of the PLMN associated with the network slices, a list of IDs or types of the active network slices, available conditions (e.g. available areas or time) of the active network slices, an ID of the PLMN associated with the active network slices; and the load status of each active network slice, including C-plane load and U-plane load.

Then, at AF side, based on the sliced network service information as exposed by the SCEF, as well as service and/ or business requirements of the third party OTT service provider, the AF may generate, at step 5, a specific service requirement for a network slice. Although there is only one AF shown in the figure, there may be more AFs operated by the third party OTT service provider. In such a case, each of the AFs may generate a specific service requirement for a network slice. The collection of these requirements of various AFs represents the requirement for the network slices of the third party service provider.

At step 6, the AF replies with a response message to the SCEF to confirm that the network service information has been successfully received.

Then at step 7, the AF may request sliced network service by sending a request message to the SCEF. The request message may include information on the network slice requirement of the AF. For example, the information may include, but not limited to, the ID and/ or type of the required network slice, a list of IDs of terminal devices allowed to access the required network slice, description of traffic or service carried by the required network slice, information on the network slice sponsor, and associated condition of the required network slice. Please note that steps 6 and 7 may alternatively be combined as one step.

At step 8, upon receiving the request message from the AF, the SCEF may perform admission control for the requirement, for example based on network slice related subscription information, the network operator's policy, availability and scalability of the required network slice and a specific requirement of the third party SP, to determine if the network slice related requirement included in the service request can be accepted or rejected.

At step 9, the SCEF replies with a response message to the AF to inform whether the service requirement can be fulfilled or not.

Then at step 10, if the network slice related requirement has passed the admission control, the SCEF may interact with the OSS/BSS to instantiate the required network slice or scale the capacity of the required network slice to fulfill the committed sliced network service.

In addition, at step 11, the SCEF may interact with the CN C-plane network function like PCRF to update policy configuration to admit the OTT service of the third party OTT service provider.

Furthermore, at step 12, the SCEF may interact with the RAN C-plane function for network slice selection to assist the slice selection for the UE who is an OTT service user.

It shall be appreciated that steps 10-12 may be performed in a different order or in parallel.

Until now, the SCEF has obtained requirement information for one or more network slices of the third party service provider. The SCEF may store this requirement information locally and provide it to the RAN directly or indirectly when needed, as discussed above with reference **FIGs. 2-4****.** If the requirement information is not stored or available at the SCEF, the SCEF may perform the method 500 to obtain the requirement information when needed.

By means of the first solution as described above with reference to **FIGs. 2-6****,** preferences or requirements of the third party service provider can be considered in selection of a network slice for service provision to terminal devices. Thus, it makes feasible for 5G network operators to effectively adopt the back-end business model service provision that is implemented via various network slices. Furthermore, the proposed architecture is in line with existing 3GPP network architecture and less cost needs to be devoted to infrastructure improvement. Therefore, the proposed solution is simple and feasible from implementation perspective since existing interfaces and network functions can still be used.

In the first solution, the network slice selection is performed in the RAN, which can effectively solve the problem regarding application of the back-end business model in 5G networks involving network slicing. In some cases, it may be more appropriate or efficient for a UE, especially for a roaming UE itself to select a specific network slice to convey user expected application traffic. For example, for a roaming UE involved in traffic control service, if there are several Virtual PLMNs (VPLMNs) are available at the roaming area, some VPLMN may provide a network slice for the traffic control service, while other VPLMNs cannot provide the network slice for the traffic control service. If the roaming UE doesn't know capabilities of network slices of each VPLMN beforehand, and the VPLMN unable to provide the slice for the traffic control service is selected, then the roaming UE may be rejected or redirected to a default slice that couldn't fulfill service requirement of the traffic control. Then user experience may be deteriorated.

The present disclosure proposes a solution (which may be referred to as a second solution hereafter) for distributing network slice information to facilitate service provision to a terminal device.

**FIG. 7** shows architecture illustrating the second solution for distributing network slice information. It shall be appreciated that the second solution can be used alone or in combination with the first solution as described above with reference to FIGs. 2-6, particularly when the back-end business model is applied.

In **FIG. 7**, there is illustrated a RAN and a core network CN associated with the RAN. The core network comprises a plurality of network slices (although two slices are shown only for illustration), which means a network operator for the core network supports the plurality of network slices. Each of the network slices may comprise its own network elements or functions, like MME and PCRF. A terminal device can access the RAN and thereby be served by a selected one of the network slices of the core network. The term "associated" used herein for "the core network associated with the RAN" means that the RAN and the core network can collaborate to provide services to a terminal device under coverage of the RAN, and the terminal device can establish a connection with a network slice of the core network via the RAN. The core network and the RAN may or may not be operated by the same network operator.

In the second solution as illustrated, a network element, e.g. a base station, in the RAN can obtain information related to one or more network slices of the core network from another network element. Particularly, the information may be obtained from the OSS/BSS in a configuration message or from a network function (such as MME) in the CN C-plane during connection establishment between the CN C-plane and the RAN C-plane.

The obtained information related to the one or more network slices may comprise at least one of the following: information on IDs of connected network slices of the core network; and information on types of the connected network slices of the core network.

The network element in the RAN may store the obtained information in a local database. Furthermore, the network element may update the stored information by adding information on a network slice to the database when that network slice is instantiated and a connection with that network slice is established or removing information on a network slice from the database when the connection with that network slice is disconnected. Alternatively or additionally, the network element may update the stored information when the usage, service or traffic type of the connected network slice is changed.

The obtained information related the one or more network slices may comprise a list of IDs and/ or types of all network slices connected with the RAN.

The network element in the RAN then broadcasts the information related to the one or more network slices to the terminal device as at least a part of system information, e.g. in Master Information Block (MIB) or System Information Block (SIB) so that the terminal device can select a preferred network slice based at least on the obtained information. The information may be periodically broadcasted or aperiodically only when any change occurs in that information.

For example, the information on IDs or types of the connected network slices is defined with a number of bits or organized as a part of PLMN related information. This information may be enriched with PLMN ID information to indicate that the corresponding network slice is provided by a specific PLMN

From the network slice related information broadcasted by the RAN, the terminal device can know available network slices IDs and/ or types in the area and even their association with the PLMN, based on which the terminal device can select a desired network slice and additionally an appropriate PLMN for efficient service provision.

By means of the second solution, when a terminal device initiates a connection establishment request to the RAN, the terminal device may include information on the network slice selected by itself in a request message to indicate its own preference for the network slice to be used for service provision. When a third party service provider is involved or the back-end business model is applied, the preference or requirement of the third party service provider may also need to be considered. In such a case, the RAN may select a more appropriate network slice for the terminal device based on the information on the selected network slice of the terminal device as well as the requirement information of the third party service provider, with consideration of preferences or requirements of both the terminal device and the third party service provider.

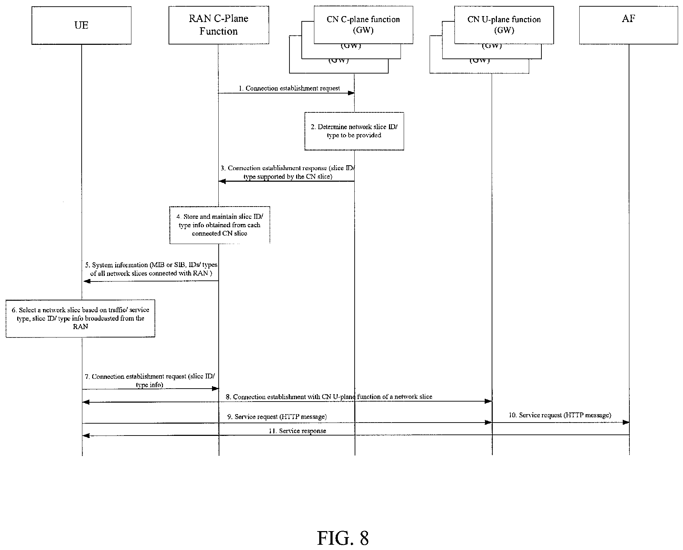

**FIG. 8** shows an interactive message flow of a specific example for the second solution where network slice related information is obtained from each connected CN network slice.

As illustrated, at step 1, a network function like a base station in the RAN C-plane (which will be referred to as RAN C-plane network function) sends a request message to a CN C-plane network function like MME of a CN network slice to establish a connection between the RAN C-plane and the CN C-plane.

Upon receipt of the request message, the CN C-plane network function like MME of the network slice may determine information on that network slice to be provided to the RAN at step 2.

Then, at step 3, the CN C-plane network function replies with a response message to the RAN to confirm successful connection establishment. Especially, the response message will include the information on the network slice, including slice ID and/ or slice type supported by the network slice.

From the response message, the RAN C-plane network function can know the slice ID and/ or the slice type supported by the network slice. Then the RAN C-plane network function stores and maintains the slice ID and/ or slice type in a local database at step 4.

The RAN C-plane network function may repeat the process from step 1 to step 4 with other configured CN C-plane network functions and obtain slice ID and/ or slice type information of each connected CN network slice. The slice ID and/ or slice type information from each connected CN network slice is used as input for system information generation.

At step 5, the RAN C-plane network function broadcasts the system information in MIB or SIB over air interface to the UE under its coverage. The broadcasted system information includes a list of slice IDs and/ or slice types supported by all CN network slices connected with the RAN. Additional information, such as an association between the slice ID or type and the PLMN ID may also be included in the MIB or SIB.

Then at step 6, based on the system information as included in the MIB or SIB, the UE can know the CN network slice IDs/ types that are available in the area and the association between the slice ID and the PLMN ID. The UE then selects a specific network slice based on the available slice ID and/ or type in the area, its traffic or service type, its own preference or its local settings. If the association between the slice ID and the PLMN ID is also known, the UE may first select a specific PLMN and then select the network slice provided by that PLMN

Afterwards, the UE can initiate a connection establishment process to the RAN via Access Stratum (AS) signaling at step 7. The selected slice ID or type may be informed to the RAN C-plane function during the process.

At step 8, the UE may initiate a connection establishment process to the selected CN network slice via NAS signalling. Related bearers or tunnels to convey application layer traffic are established during the process.

At step 9, through the bearers or tunnels established between the UE and the CN network slice, the UE sends a service request, such as an HTTP request, to an application server hosting an application function.

At step 10, the CN U-plane function like S/P-GW in the network slice may intercept the user traffic and enforce a certain policy to the user traffic. Then, the user traffic is routed further to the application server.

At step 11, the application server replies with an application layer response message. Thereby, the OTT service can be provided to the UE.

It shall be appreciated that the operations from step 7 to step 11 are well known to those skilled in the art, which are mentioned herein merely for the purpose of description integrity.

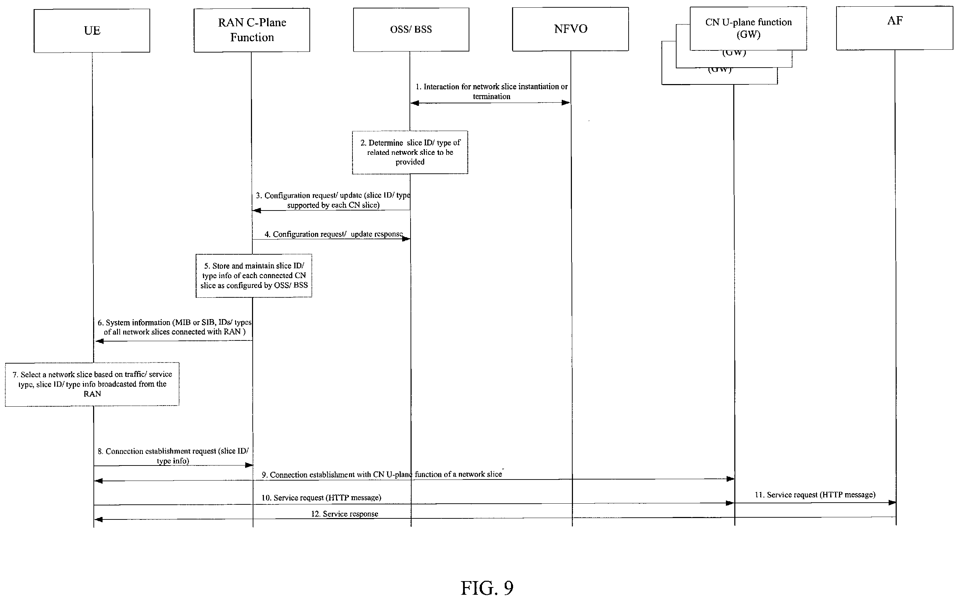

**FIG. 9** shows an interactive message flow of a specific example for the second solution where network slice related information is obtained from the OSS/ BSS.

As illustrated, at step 1, the OSS/BSS interacts with a cloud management and orchestration system, e.g. Network Functions Virtualization Orchestrator (NFVO), to initiate or terminate a core network slice based on business requirements.

Based on network slice status information as informed by the NFVO, the OSS/BSS generates configuration information for the RAN at step 2. Particularly, the configuration information includes information on all active network slices that are to be connected with the RAN, including IDs and/ or types of these network slices.

At step 3, the OSS/BSS system provides the configuration information to the RAN C-plane network function by a message. Particularly, the message includes a list of IDs and/ or types supported to all active CN slices that will be connected with the RAN.

At step 4, the RAN C-plane network function replies with a response message to the OSS/BSS to confirm the related configuration information has been successfully received.

At step 5, based on the configuration information provided by the OSS/BSS, the RAN C-plane network function can know the slice ID and/ or the slice type supported by each connected network slice. Then the RAN C-plane network function stores and maintains the slice ID and/ or slice type in a local database.

The following steps 6-12 are the same as steps 5-11 of **FIG. 8****,** which thus will not be repeated for the purpose of simplicity.

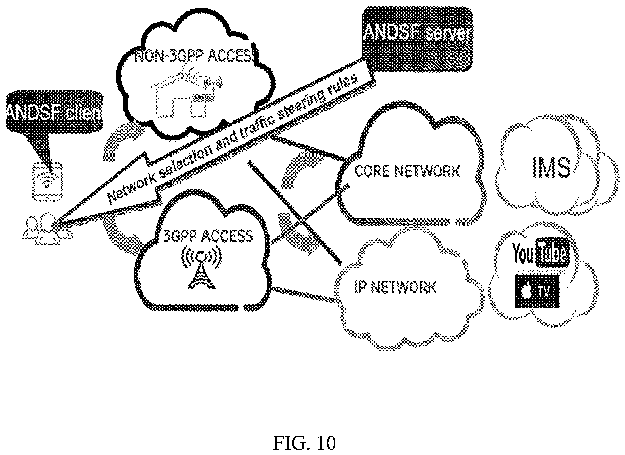

In order to assist an UE for network selection and traffic or service distribution over different access networks in the context of both 3GPP access and non-3GPP access, as indicated in **FIG. 10****,** an Access Network Discovery and Selection Function (ANDSF) is introduced to assist the UE for network discovery, as well as for a network operator to steer user traffic across different access networks and core networks. So far, many different policies have been defined in 3GPP for traffic steering, such as the Inter-system mobility policy and inter-system routing policy. Usually, a network operator can realize its strategy by providing policy information from an ANDSF server to an ANDSF client at UE side. Based on the policy information from network side and possibly other information, the UE can select different specific access networks to access different services. In addition, another type of policy is defined as the Inter-APN (Access Point Name) routing policy to assist an Inter-APN capable UE to select a specific PDN (Public Data Network) connection to route a specific IP traffic flow in the case of more than PDN connections for the UE to access a specific service.

As introduced in the Background section, it can be expected that 5G networks will be deployed over cloud infrastructure. In a cloud environment, it is highly possible that a specific network slice is dynamically instantiated/ terminated or scaled out/ in to support a flexible business model and efficient resource utilization. The network slice provided by a network operator is more dynamic compared to a traditional network deployed in a non-cloud environment. In the case of more than one network slices being deployed, a UE may access one or more network slices simultaneously due to different applications or services. In this situation, one important issue is how to steer user traffic to an appropriate slice based on the operator's policy, a network slice provision status and user preferences. Ideally, a specific UE type or a specific service type is supposed to access a specific network slice that is ideally matched. In the practical situation, it couldn't be guaranteed that the ideal slice is always available and in a right load status. In addition, the mapping relation between the slice and the UE or service type may be dynamic in a changing business environment.

For example, an ideal slice for a Tactile Internet application is out of service or overloaded, there are still many Tactile Internet UEs trying to access the "ideal" slice. Then, these UEs would be rejected or redirected to other slices, which would result in a large signaling overhead and deteriorated user experience for Tactile Internet users.

As another example, when a network slice used for the Tactile Internet is in a trial phase, if a normal Tactile Internet user selects that slice and some problem happens in the network function of that network slice before it is successfully verified, then user experience would be negatively impacted. Once the network function and performance of the network slice is verified, normal Tactile Internet users are expected to access the slice for Tactile Internet applications. It means that the operators' policy for UEs to access a specific network slice may change over time. If this change is not updated to UEs timely, the problem as explained above will happen.

Although the current ANDSF system is effective to steer user traffic across different access networks and an IP exit interface of the core network (represented by APN), the existing ANDSF based solution doesn't take the new network capability brought by network slicing into account and may not work well in 5G sliced networks.

The following examples propose a solution (which may be referred to as a third solution hereafter) for traffic steering to facilitate service provision to a terminal device.

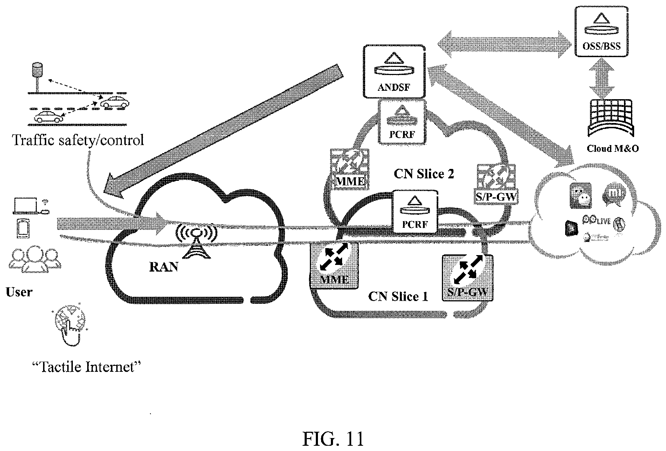

**FIG. 11** shows architecture illustrating the third solution for traffic steering. It shall be appreciated that the third solution can be used alone or in combination with the first and/ or second solutions as described above with reference to **FIGs. 2-9****,** for example when the back-end business model is applied, for more flexible and efficient service provision to the terminal device .

In **FIG. 11****,** there is illustrated a RAN and a core network CN associated with the RAN. The core network comprises a plurality of network slices (although two slices are shown only for illustration), which means a network operator for the core network supports the plurality of network slices. Each of the network slices may comprise its own network elements or functions, like MME and PCRF. A terminal device can access the RAN and thereby be served by a selected one of the network slices of the core network. The term "associated" used herein for "the core network associated with the RAN" means that the RAN and the core network can collaborate to provide services to a terminal device under coverage of the RAN and the terminal device may establish a connection with a network slice of the core network via the RAN. The core network and the RAN may or may not be operated by the same network operator.

In the third solution as illustrated, a network element, e.g. a base station, in the RAN can obtain information related to one or more network slices of the core network from another network element, e.g. ANDSF or a similar network function in the CN C-plane. Particularly, the information may comprise a traffic steering policy generated at the other network element.

In this solution, the network element in the RAN does not perform any processing on the obtained information, but instead forward the obtained information transparently to the terminal device.

Actually, information on the traffic steering policy may be provided to the terminal device via an S14 type of interface. This provision is not limited to being forwarded by the RAN. For example, the information on the traffic steering policy generated at the ANDSF or the similar network function in the CN C-plane may be forwarded transparently via other access networks, e.g. WiFi networks, to the terminal device.

The traffic steering policy is generated at the ANDSF or the similar network function in the CN C-plane based on at least one of the following: a network slice status from the OSS/ BSS; a traffic steering policy of the network operator, e.g. a mapping relation between a service or traffic type or a type of the terminal device and the network slice type; requirement information on one or more network slices of a third party service provider for the terminal device as discussed above; and information related to the terminal device, e.g. a location, type, and roaming status.

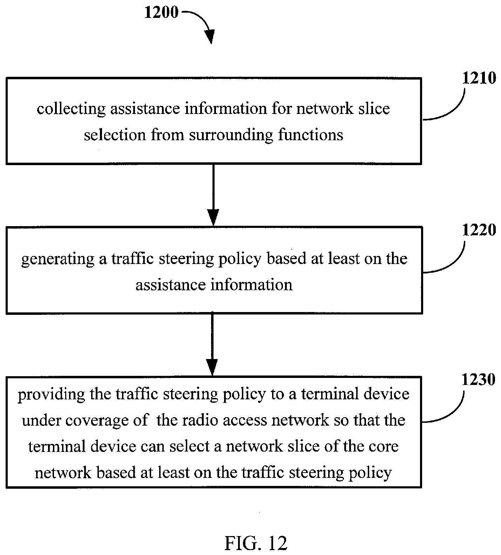

**FIG. 12** illustrates a flowchart of a method 1200 performed at a network function in the core network, e.g. ANDSF or a similar network function in the CN C-plane. The method 1200 will be described based on the architecture as illustrated in FIG. 11. The core network comprises a plurality of network slices and is associated with a radio access network. For ease of description, the network function in the CN C-plane will be exemplarily represented by ANDSF in the following description.

As illustrated, the method 1200 enters at block 1210, in which assistance information for network slice selection is collected from surrounding functions, e.g. from the OSS/ BSS, or from application function(s) operated by a third party service provider.

For example, the OSS/ BSS may provide any of the following information: IDs and/ or types of the network slices of the core network; an instantiation status (e.g. being instantiated or terminated) of each of the network slices; a load status (e.g. light load, normal load or overload) of each of the network slices; and a traffic steering policy or strategy of a network operator for the core network, e.g. which network slice is preferred and its associated traffic, service or usage type with regard to respective users.

The application function(s) of the third party service provider may provide preference information of the third party service provider, e.g. an ID and/ or type of a preferred or required network slice, traffic or service description information, UE ID information, and associated conditions like an access network type, UE location or time for requesting a service etc..

In addition, network slice related subscription information may be collected from a subscription database in the core network. For example, this information may indicate which network slice is permitted or forbidden for a specific terminal device.

Also, the terminal device may report its own information to the network function in the CN C-plane, e.g. a type of the terminal device, a traffic, service or usage type, and a preferred network slice ID and/ or type.

Then at block 1220, a traffic steering policy is generated based at least on the assistance information.

For example, when generating the policy, the ANDSF may base on the network slice status information from the OSS/BSS to add one slice ID in the traffic steering policy if a new slice is instantiated, or remove a slice ID from the traffic steering policy if the corresponding slice is terminated.

Based on the network operator's strategy or policy as configured from the OSS/BSS, the ANDSF may determine a slice ID and/ or type for a type of UEs, while it may determine another slice ID and/ or type for another type of UEs. In addition, the ANDSF may determine a slice ID and/ or type for UEs involved in a type of application or traffic, while it may determine another slice ID and/ or type for UEs involved in another type of application or traffic.

Based on the requirement information from the application function(s) of the third party service provider, a specific network slice is prioritized over another network slice for the terminal device at a certain condition. It could be different for another terminal device or at a different condition.

Based on the subscription information, a certain slice may be permitted for a user, while another certain slice is not permitted. The slice ID and/ or type included in the generated traffic steering policy will be set accordingly.

Based on the UE related info, a certain slice type may be determined for a specific UE type at one location, while another slice type can be determined for a different UE type or at a different location. Besides, a certain slice may be selected for a UE in a roaming scenario, while another slice maybe selected for the same UE in a non-roaming scenario.

Furthermore, the slice ID and/ or type may be determined based on RAT or access network capability that is available in the area where the terminal device is located.

The generated traffic steering policy may comprise at least one of the ID of a preferred network slice and the type of the preferred network slice.

The generated traffic steering policy may further comprise any of the following: a list of IDs of preferred network slices; a list of types of the preferred network slices; a priority indication associated with each of the preferred network slices; description information on a type of traffic or service carried by each of the preferred network slices; and a validity condition of the traffic steering policy.

At block 1230, the ANDSF provides the traffic steering policy to a terminal device under coverage of the radio access network so that the terminal device can select an appropriate network slice of the core network based on the traffic steering policy and possibly based further on user preferences and its local information. In some cases, user preferences may override the traffic steering policy provided from the network side if permitted by the policy.

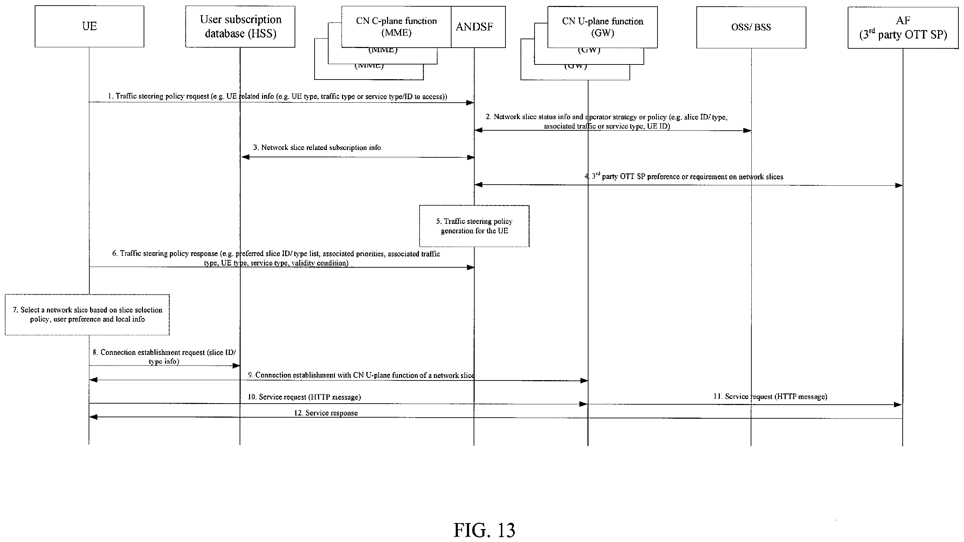

**FIG. 13** shows an interactive message flow of a specific example for the third solution. In this example, the ANDSF is used as an example of the network function in the CN C-plane.

As illustrated, at step 1, the UE may actively contact the ANDSF by a request message to retrieve a traffic steering policy. In order to assist the ANDSF for more effective policy generation, the UE may report some UE related information, like UE type, traffic type or service type to the ANDSF by the message.

Upon reception of the request message from the UE, the ANDSF may contact surrounding network functions to get assistance information if it is not available locally, so as to generate a traffic steering policy for the UE.

At step 2, the ANDSF interacts with the OSS/BSS to get a network operator's policy or strategy on traffic steering, particularly on network slice selection, and slice status information of each network slice for the UE. The OSS/BSS provides the ANDSF with the operator's strategy or policy on traffic steering across network slices, which may comprise a list of preferred network slice IDs and/ or types, the associated traffic type or service type, and a list of UE IDs that are allowed to access the preferred network slices.

At step 3, the ANDSF interacts with the Home Subscriber Server (HSS) to get network slice related user subscription information. The HSS provides the ANDSF with the network slice related user subscription information, e.g. the subscribed network slice ID and/ or type.

At step 4, the ANDSF interacts with the application function(s) operated by a third party OTT service provider as indicated in the UE related information directly or indirectly through an intermediate function like SCEF, to get a preference or requirement on a specific network slice to convey user traffic. The application function(s) replies with requirement information of the third party OTT provider for network slice selection. The preference or requirement information may include a list IDs and/ or types of preferred slices, description information on associated traffic or service, and related UE information.

Please note that not all of the steps 2-3 are mandatory. For example, the method can still work without step 4. Please also note steps 2-4 are not necessarily performed in the order as shown. Rather, they can be performed in a different order or in parallel.

At step 5, based on the UE related information reported from the UE, the assistance information including the network operator's strategy or policy retrieved from the OSS/BSS, the network slice related user subscription information from the HSS, and/ or the third party OTT service provider's requirement information from the application function(s), the ANDSF generates a traffic steering policy for the UE.

At step 6, the ANDSF provides the generated traffic steering policy to the UE with a response message. The response message may include but not limited to the following information: a list of IDs of preferred network slices; a list of types of the preferred network slices; a priority indication associated with each of the preferred network slices; description information on a type of traffic or service carried by each of the preferred network slices; and/ or a validity condition of the traffic steering policy.

At step 7, the UE applies the traffic steering policy as informed by the ANDSF. In particular, the UE selects a specific network slice based on this traffic steering policy, and optionally based further on UE local information and user preference information. Sometimes, the user preference may override the traffic steering policy informed from network side if permitted by the policy.

Afterwards, the UE can initiate a connection establishment process to the RAN via Access Stratum (AS) signaling at step 8. The selected slice ID/ type may be informed to the RAN C-plane function during the process.

At step 9, the UE may initiate a connection establishment process to the selected CN network slice via NAS signalling. Related bearers or tunnels to convey application layer traffic are established during the process.

At step 10, through the bearers or tunnels established between the UE and the CN network slice, the UE sends a service request, such as an HTTP request, to an application server hosting an application function.

At step 11, the CN U-plane function like S/P-GW in the network slice may intercept the user traffic and enforce a certain policy to the user traffic. Then, the user traffic is routed further to the application server.

At step 12, the application server replies with an application layer response message. Thereby, the OTT service can be provided to the UE.

Clearly, the first, second and third solutions can be applied alone respectively or in combination so as to more efficiently and flexibly select a more appropriate network slice for a UE in various scenarios, such as a third party SP involved scenario, a roaming scenario etc.. Where the second and third solutions are combined, a UE may obtain traffic steering policy information from an ANDSF and meanwhile obtain network slice information from the RAN. Based at least on both of the obtained information, the UE can select a desired network slice for a certain service provision. In a further embodiment, if the service is provided by a third party SP, the RAN can select an appropriate network slice for the UE in overall consideration of both the UE's own preference and the requirement of the third party SP as well as factors.

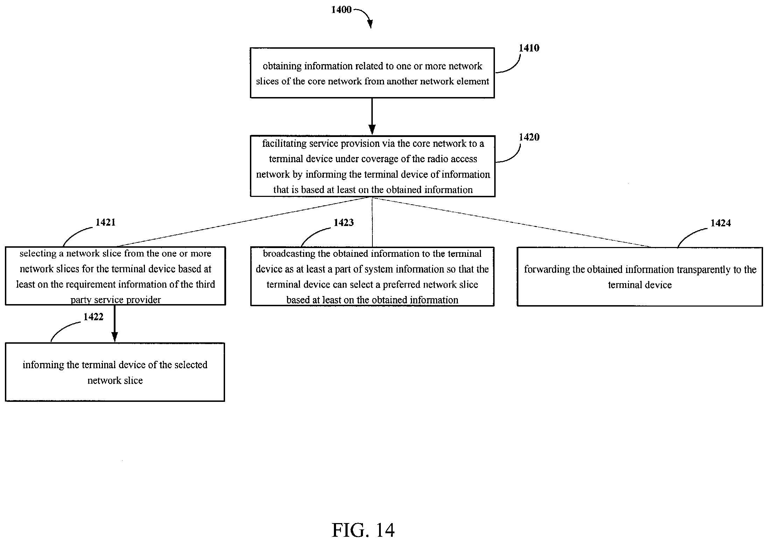

In general, **FIG. 14** illustrates a flowchart of a method 1400 for service provision at a network element in a radio access network associated with a core network comprising a plurality of network slices according to embodiments of the present disclosure.

Particularly, the method 1400 enters at block 1410, in which information related to one or more network slices of the core network is obtained from another network element. Then at block 1420, service provision via the core network to a terminal device under coverage of the radio access network is facilitated by informing the terminal device of information that is based at least on the obtained information.

In some embodiments which may correspond to the first solution as discussed above, the information related to the one or more network slices is obtained in response to receipt of a request message from the terminal device for requesting a service. In these embodiments, the information related to the one or more network slices comprises at least requirement information indicative of a requirement on the one or more network slices of a third party service provider for providing the requested service to the terminal device. Furthermore, facilitating service provision via the core network to the terminal device is implemented by selecting, at block 1421, a network slice from the one or more network slices for the terminal device based at least on the requirement information of the third party service provider and then informing, at block 1422, the terminal device of the selected network slice.

In an embodiment, the requirement information of the third party service provider may comprise at least one of the following: an identifier of a required network slice; a type of the required network slice; an identifier of a preferred network slice; and a type of the preferred network slice.

In a further embodiment, the requirement information of the third party service provider may further comprise any of the following: information on a condition to apply the required or preferred network slice; information on a sponsor of the required or preferred network slice; a list of identifiers of terminal devices that are permitted to access the required or preferred network slice; and description of traffic or service to be carried by the required or preferred network slice.

The network element is a network function for selecting a network slice in the control plane of the radio access network, while the other network element is a SCEF. An example of the other network element is a network function, e.g. PRCF, in the control plane of a connected network slice of the core network, which may receive the information related to the one or more network slices from the SCEF.

In some other embodiments which may correspond to the first solution as discussed above, the obtained information related to the one or more network slices may comprise at least one of the following: information on identifiers of connected network slices of the core network; and information on types of the connected network slices of the core network. The network element may be a base station in the radio access network, while the other network element may be a network function, e.g. MME, in the control plane of each of the connected network slices of the core network or the OSS/BSS associated with the core network.

In an embodiment, facilitating service provision via the core network to the terminal device may be implemented by broadcasting, at block 1423, the obtained information to the terminal device as at least a part of system information so that the terminal device can select a preferred network slice based at least on the obtained information.

In another embodiment, obtaining information related to the one or more network slices may further comprise storing the information related to the one or more network slices and updating the stored information in response to a change in the connected network slices.

In some other examples which may correspond to the third solution as discussed above, the obtained information related to the one or more network slices may comprise a traffic steering policy generated at the other network element.

Facilitating service provision via the core network to a terminal device may be implemented by forwarding, at block 1424, the obtained information transparently to the terminal device. The other network element may be an ANDSF, in the control plane of the core network.

The traffic steering policy may be generated at the other network element based on at least one of the following: a network slice status from an operations support system/business support system, OSS/BSS; a traffic steering policy of a network operator for the core network; requirement information on one or more network slices of a third party service provider for the terminal device; and information related to the terminal device.

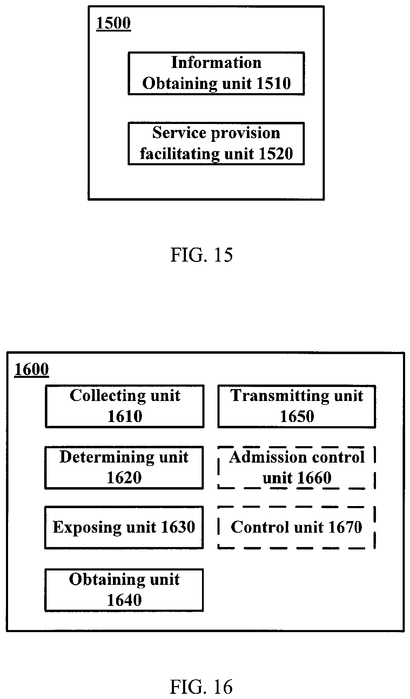

**FIG. 15** illustrates a schematic block diagram of an apparatus 1500 adapted for service provision at a network element in a radio access network associated with a core network comprising a plurality of network slices according to embodiments of the present disclosure.

Particularly, the apparatus 1500 comprises an information obtaining unit 1510 configured to obtain information related to one or more network slices of the core network from another network element and a service provision facilitating unit 1520 configured to facilitate service provision via the core network to a terminal device under coverage of the radio access network by informing the terminal device of information that is based at least on the obtained information.

In some embodiments which may correspond to the first solution as discussed above, the information obtaining unit is configured to obtain the information related to the one or more network slices in response to receipt of a request message from the terminal device for requesting a service. In these embodiments, the information related to the one or more network slices comprises at least requirement information indicative of a requirement on the one or more network slices of a third party service provider for providing the requested service to the terminal device. The service provision facilitating unit 1520 is configured to select a network slice from the one or more network slices for the terminal device based at least on the requirement information of the third party service provider and to inform the terminal device of the selected network slice.

In an embodiment, the requirement information of the third party service provider may comprise at least one of: an identifier of a required network slice; a type of the required network slice; an identifier of a preferred network slice; and a type of the preferred network slice.

In another embodiment, the requirement information of the third party service provider may further comprise any of the following: information on a condition to apply the required or preferred network slice; information on a sponsor of the required or preferred network slice; a list of identifiers of terminal devices that are permitted to access the required or preferred network slice; and description of traffic or service to be carried by the required or preferred network slice.

The network element in the radio access network is a network function for selecting a network slice in the control plane of the radio access network, while the other network element is an SCEF. In an example, the other network element is a network function in the control plane of a connected network slice of the core network. In the latter case, the information related to the one or more network slices may be received by the network function in the control plane of the core network from the SCEF.

In the second solution as discussed above, the obtained information related to the one or more network slices may comprise at least one of the following: information on identifiers of connected network slices of the core network; and information on types of the connected network slices of the core network. The service provision facilitating unit 1520 may be configured to broadcast the obtained information to the terminal device as at least a part of system information so that the terminal device can select a preferred network slice based at least on the obtained information.

In an example, the information obtaining unit 1510 may be configured to store the information related to the one or more network slices and to update the stored information in response to a change in the connected network slices.

In a further example, the network element may be a base station in the radio access network, while the other network element may be a network function in the control plane of each of the connected network slices of the core network or an OSS/BSS associated with the core network.

In some other examples which may correspond to the third solution as discussed above, the obtained information related to the one or more network slices may comprise a traffic steering policy generated at the other network element. The service provision facilitating unit 1520 may be configured to forward the obtained information transparently to the terminal device.

The traffic steering policy may be generated at the other network element based on at least one of the following: a network slice status from an operations support system/business support system, OSS/BSS; a traffic steering policy of a network operator for the core network; requirement information on one or more network slices of a third party service provider for the terminal device; and information related to the terminal device.

The other network element may be an ANDSF in the control plane of the core network.

The above units 1510 and 1520 may be configured to implement corresponding operations or steps and to achieve corresponding technical effects as described with reference to **FIGs. 2-14****,** and thus will not be detailed herein for the purpose of simplicity.

**FIG. 16** illustrates a schematic block diagram of an apparatus 1600 at a network element for service capability exposure, e.g. SCEF, according to some embodiments of the present disclosure.

Particularly, the apparatus 1600 comprises a collecting unit 1610, a determining unit 1620 and an exposing unit 1630. The collecting unit 1610 is configured to collect status and capability information on one or more network slices of a core network that comprises a plurality of network slices and is associated with a radio access network. The determining unit 1620 is configured to determine sliced network service information based on the collected status and capability information. The exposing unit 1630 is configured to expose the sliced network service information to an application function operated by a third party service provider for providing a service to a terminal device via the radio access network.

The apparatus 1600 further comprises an obtaining unit 1640 and a transmitting unit 1650. The obtaining unit 1640 is configured to obtain requirement information on a requirement for one or more network slices of the third party service provider from the application function that generates the requirement based at least on the sliced network service information. The transmitting unit 1650 is configured to transmit the requirement information to a network element in the radio access network so as to facilitate selection of a network slice in the radio access network for the terminal device.

In an embodiment, the apparatus 1600 may further comprise an admission control unit 1660 configured to perform admission control for the requirement from the application function and a control unit 1670 configured to reject the requirement if the admission control for that requirement fails and to accept the requirement if the admission control for that requirement succeeds.

The above units 1610-1670 may be configured to implement corresponding operations or steps and to achieve corresponding technical effects as described with reference to **FIGs. 7-9****,** and thus will not be detailed herein for the purpose of simplicity.

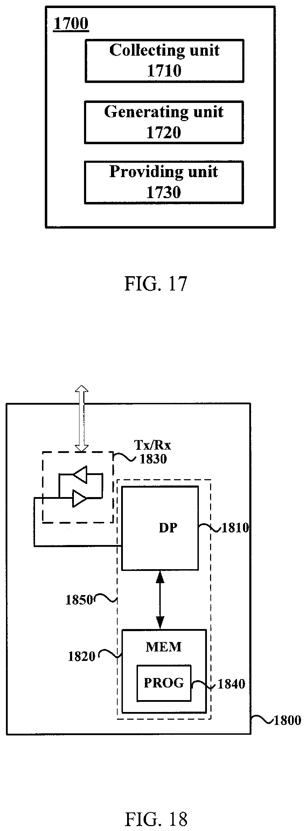

**FIG. 17** illustrates a schematic block diagram of an apparatus 1700 at a network element, e.g. ANDSF, in a core network comprising a plurality of network slices, wherein the core network is associated with a radio access network.

Particularly, the apparatus 1700 comprises a collecting unit 1710, a generating unit 1720 and a providing unit 1730. The collecting unit 1710 is configured to collect assistance information for network slice selection from surrounding functions. The generating unit 1720 is configured to generate a traffic steering policy based at least on the assistance information. The providing unit 1730 is configured to provide the traffic steering policy to a terminal device under coverage of the radio access network so that the terminal device can select a network slice of the core network based at least on the traffic steering policy for service provision via the selected network slice and the associated radio access network.

In an example, the collecting unit 1710 may be configured to perform at least one of: collecting at least one of the following from an OSS/BSS associated with the core network, an identifier, type, instantiation status, load status of each of the network slices of the core network, and a network slice selection strategy of a network operator for the core network; collecting preference information from an application function operated by a third party service provider for providing a service to the terminal device; collecting network slice related subscription information from a subscription database in the core network; and collecting user related information from the terminal device.

The generated traffic steering policy may comprise at least one of the following: an identifier of a preferred network slice and a type of the preferred network slice.

The generated traffic steering policy may further comprise any of the following: a list of identifiers of preferred network slices; a list of types of the preferred network slices; a priority indication associated with each of the preferred network slices; description information on a type of traffic or service carried by each of the preferred network slices; and a validity condition of the traffic steering policy.

The traffic steering policy may be provided to the terminal device via an S14 type of interface.

The above units 1710-1730 may be configured to implement corresponding operations or steps and to achieve corresponding technical effects as described with reference to FIGs. 10-13, and thus will not be detailed herein for the purpose of simplicity.

**FIG. 18** illustrates a schematic block diagram of an apparatus 1800 according to embodiments of the present disclosure. In some embodiment, the apparatus 1800 may be embodied at or as at least part of a base station in a radio access network or independently from the base station, which may correspond to the first solution or method 1400. In some other embodiments, the apparatus 1800 may be embodied at or as at least part of a network element like SCEF, which may correspond to the second solution or method 500. In some examples, the apparatus 1800 may be embodied at or as at least part of a network element in a core network like ANDSF, which may correspond to the third solution or method 1200.

The apparatus 1800 comprises at least one processor 1810, such as a data processor (DP) and at least one memory (MEM) 1820 coupled to the processor 1810. The apparatus 1800 may further comprise a transmitter TX and receiver RX 1830 coupled to the processor 1810 for establishing connections with other network elements. The MEM 1820 stores a program (PROG) 1840. In some implementations, the PROG 1840 may include instructions that, when executed on the associated processor 1810, enable the apparatus 800 to operate in accordance with some embodiments of the present disclosure, for example to perform the method 1400. In some other implementations, the PROG 1840 may include instructions that, when executed on the associated processor 1810, enable the apparatus 1800 to operate in accordance with some other embodiments of the present disclosure, for example to perform the method 500. In some other implementations, the PROG 1840 may include instructions that, when executed on the associated processor 1810, enable the apparatus 1800 to operate in accordance with some other embodiments of the present disclosure, for example to perform the method 1200. A combination of the at least one processor 1810 and the at least one MEM 1820 may form processing means 1850 adapted to implement respective embodiments of the present disclosure as described with reference to FIGs. 2-14.

The MEM 1820 may be of any type suitable to the local technical environment and may be implemented using any suitable data storage technology, such as semiconductor based memory devices, magnetic memory devices and systems, optical memory devices and systems, fixed memory and removable memory, as non-limiting examples.

The processors 1810 may be of any type suitable to the local technical environment, and may include one or more of general purpose computers, special purpose computers, microprocessors, digital signal processors DSPs and processors based on multicore processor architecture, as non-limiting examples.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these functional modules/units described as embodiments of the present disclosure may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

The protection scope of the disclosure is defined by the accompanying claims.

## Claims

1. A method (1400) in an architecture for service provision via a network slice, the architecture comprising a network element that is a network function for selecting a network slice in a control plane of a radio access network associated with a core network comprising a plurality of network slices, the architecture further comprising a further network element that is a service capability exposure function, SCEF, the method comprising:
• obtaining (1410), by the network element that is the network function, in response to receipt of a request message from a terminal device for requesting a service, information related to one or more network slices of the core network from the SCEF; wherein the information comprises at least requirement information indicative of a requirement on the one or more network slices of a third-party service provider for providing the requested service to the terminal device, wherein the method, performed by the SCEF, further comprises:
o collecting (510) status and capability information on the one or more network slices of the core network;
o determining (520) sliced network service information based on the collected status and capability information;
o exposing (530) the sliced network service information to an application function operated by a third-party service provider for providing a service to the terminal device via the radio access network;
o obtaining (540) requirement information on the requirement for one or more network slices of the third-party service provider from the application function that generates the requirement based at least on the sliced network service information; and
o transmitting (550) the requirement information to the network element that is the network function so that the network element that is the network function obtains the requirement information, and so as to facilitate selection of a network slice in the radio access network for the terminal device; and
• facilitating (1420), by the network element that is the network function, service provision via the core network to a terminal device under coverage of the radio access network by informing the terminal device of information that is based at least on the obtained information, comprising
- selecting (1421) a network slice from the one or more network slices for the terminal device based at least on the requirement information of the third-party service provider; and
- informing (1422) the terminal device of the selected network slice.

2. The method according to claim 1, wherein
• said requirement information of the third-party service provider comprises at least one of: an identifier of a required network slice; a type of the required network slice; an identifier of a preferred network slice; and a type of the preferred network slice.

3. The method according to claim 2, wherein
• said requirement information of the third-party service provider further comprises any of the following: information on a condition to apply the required or preferred network slice; information on a sponsor of the required or preferred network slice; a list of identifiers of terminal devices that are permitted to access the required or preferred network slice; and description of traffic or service to be carried by the required or preferred network slice.

4. The method according to any of the preceding claims, wherein said facilitating service provision via the core network to the terminal device by informing the terminal device of information that is based at least on the obtained information comprises:
• broadcasting (1423) the obtained information to the terminal device as at least a part of system information so that the terminal device can select a preferred network slice based at least on the obtained information.

5. The method according to any of the preceding claims, wherein said obtaining information related to the one or more network slices further comprises:
• storing the information related to the one or more network slices; and
• updating the stored information in response to a change in the connected network slices.

6. The method according to any of the preceding claims, wherein
• the network element that is the network function is a base station in the radio access network.

7. The method according to any one of the preceding claims, further comprising:
• performing, by the SCEF, admission control for the requirement from the application function;
• rejecting, by the SCEF, the requirement if the admission control for that requirement fails; and
• accepting, by the SCEF, the requirement if the admission control for that requirement succeeds.

8. An architecture for service provisioning via a network slice, the architecture comprising a network element that is a network function for selecting a network slice in a control plane of a radio access network associated with a core network comprising a plurality of network slices, the architecture further comprising a further network element that is a service capability exposure function, SCEF,
wherein the network element that is the network function is adapted to:
• obtain (1410), in response to receipt of a request message from a terminal device for requesting a service, information related to one or more network slices of the core network from the SCEF; wherein the information comprises at least requirement information indicative of a requirement on the one or more network slices of a third-party service provider for providing the requested service to the terminal device; and
• facilitate (1420) service provision via the core network to a terminal device under coverage of the radio access network by informing the terminal device of information that is based at least on the obtained information, comprising
- selecting (1421) a network slice from the one or more network slices for the terminal device based at least on the requirement information of the third-party service provider; and
- informing (1422) the terminal device of the selected network slice, and
wherein the further network element that is the SCEF is adapted to:
• collect (510) status and capability information on the one or more network slices of the core network;
• determine (520) sliced network service information based on the collected status and capability information;
• expose (530) the sliced network service information to an application function operated by a third-party service provider for providing a service to the terminal device via the radio access network;
• obtain (540) requirement information on the requirement for one or more network slices of the third-party service provider from the application function that generates the requirement based at least on the sliced network service information; and
• transmit (550) the requirement information to the network element that is the network function so that the network element that is the network function obtains the requirement information, and so as to facilitate selection of a network slice in the radio access network for the terminal device.

9. A computer program product, comprising instructions which, when executed on at least one processor, cause the at least one processor to carry out the method according to any of claims 1 to 7.

## Patentansprüche

1. Verfahren (1400) in einer Architektur zur Dienstbereitstellung über einen Netzwerk-Slice, wobei die Architektur ein Netzwerkelement umfasst, das eine Netzwerkfunktion zum Auswählen eines Netzwerk-Slices in einer Steuerebene eines Funkzugangsnetzwerks ist, das mit einem Kernnetzwerk assoziiert ist, das eine Mehrzahl von Netzwerk-Slices umfasst, wobei die Architektur ferner ein weiteres Netzwerkelement umfasst, das eine Dienstfähigkeitsdarlegungsfunktion, SCEF, ist, wobei das Verfahren umfasst:
• Erhalten (1410) von Informationen in Bezug auf einen oder mehrere Netzwerk-Slices des Kernnetzwerks von der SCEF durch das Netzwerkelement, das die Netzwerkfunktion ist, in Reaktion auf den Empfang einer Beantragungsnachricht von einer Endgerätevorrichtung zum Beantragen eines Dienstes; wobei die Informationen zumindest Anforderungsinformationen umfassen, die eine Anforderung des einen oder der mehreren Netzwerk-Slices eines Drittdienstanbieters zum Bereitstellen des beantragten Dienstes für die Endgerätevorrichtung anzeigen, wobei das Verfahren, das von der SCEF durchgeführt wird, ferner umfasst:
o Sammeln (510) von Status- und Fähigkeitsinformationen über den einen oder die mehreren Netzwerk-Slices des Kernnetzwerks;
o Bestimmen (520) von Netzwerk-Slice-Dienstinformationen basierend auf den gesammelten Status- und Fähigkeitsinformationen;
o Darlegen (530) der Netzwerk-Slice-Dienstinformationen für eine Anwendungsfunktion, die von einem Drittdienstanbieter zum Bereitstellen eines Dienstes für die Endgerätevorrichtung über das Funkzugangsnetzwerk betrieben wird;
o Erhalten (540) von Anforderungsinformationen über die Anforderung für den einen oder die mehreren Netzwerk-Slices des Drittdienstanbieters von der Anwendungsfunktion, welche die Anforderung wenigstens basierend auf den Netzwerk-Slice-Dienstinformationen erzeugt; und
o Senden (550) der Anforderungsinformationen an das Netzwerkelement, das die Netzwerkfunktion ist, so dass das Netzwerkelement, das die Netzwerkfunktion ist, die Anforderungsinformationen erhält, und Auswahl eines Netzwerk-Slice im Funkzugangsnetzwerk für die Endgerätevorrichtung ermöglicht wird; und
• Ermöglichen (1420) von Dienstbereitstellung über das Kernnetzwerk für eine Endgerätevorrichtung im Versorgungsbereich des Funkzugangsnetzwerks durch das Netzwerkelement, das die Netzwerkfunktion ist, durch Informieren der Endgerätevorrichtung über Informationen, die wenigstens auf den erhaltenen Informationen basieren, umfassend
- Auswählen (1421) eines Netzwerk-Slices aus dem einen oder den mehreren Netzwerk-Slices für die Endgerätevorrichtung basierend auf den Anforderungsinformationen des Drittdienstanbieters; und
- Informieren (1422) der Endgerätevorrichtung über den ausgewählten Netzwerk-Slice.

2. Verfahren nach Anspruch 1, wobei
• die Anforderungsinformationen des Drittdienstanbieters mindestens eines umfassen von: einer Kennung eines angeforderten Netzwerk-Slices; einem Typ des angeforderten Netzwerk-Slices; einer Kennung eines bevorzugten Netzwerk-Slices und einem Typ des bevorzugten Netzwerk-Slices.

3. Verfahren nach Anspruch 2, wobei
• die Anforderungsinformationen des Drittdienstanbieters ferner eines von Folgenden umfassen: Informationen über eine Bedingung zum Anwenden des angeforderten oder bevorzugten Netzwerk-Slices; Information über einen Sponsor des angeforderten oder bevorzugten Netzwerk-Slices; eine Liste von Kennungen von Endgerätevorrichtungen mit Zugangsberechtigung für den angeforderten oder bevorzugten Netzwerk-Slice; und Beschreibung von Verkehr oder Dienst, der durch den angeforderten oder bevorzugten Netzwerk-Slice durchgeführt werden soll.

4. Verfahren nach einem der vorhergehenden Ansprüche, wobei das Ermöglichen von Dienstbereitstellung über das Kernnetzwerk für die Endgerätevorrichtung durch Informieren der Endgerätevorrichtung über Informationen, die wenigstens auf den erhaltenen Informationen basieren, umfasst:
• Senden (1423) der erhaltenen Informationen per Broadcast an die Endgerätevorrichtung wenigstens als Teil von Systeminformationen, so dass die Endgerätevorrichtung einen bevorzugten Netzwerk-Slice wenigstens basierend auf den erhaltenen Informationen auswählen kann.

5. Verfahren nach einem der vorhergehenden Ansprüche, wobei das Erhalten von Informationen in Bezug auf den einen oder die mehreren Netzwerk-Slices ferner umfasst:
• Speichern der Informationen in Bezug auf den einen oder die mehreren Netzwerk-Slices; und
• Aktualisieren der gespeicherten Informationen in Reaktion auf eine Änderung der verbundenen Netzwerk-Slices.

6. Verfahren nach einem der vorhergehenden Ansprüche, wobei
• das Netzwerkelement, das die Netzwerkfunktion ist, eine Basisstation im Funkzugangsnetzwerk ist.

7. Verfahren nach einem der vorhergehenden Ansprüche, ferner umfassend:
• Durchführen von Zulassungskontrolle durch die SCEF für die Anforderung von der Anwendungsfunktion;
• Ablehnen der Anforderung durch die SCEF, wenn die Zulassungskontrolle für diese Anforderung erfolglos ist; und
• Akzeptieren der Anforderung durch die SCEF, wenn die Zulassungskontrolle für diese Anforderung erfolgreich ist.

8. Architektur zur Dienstbereitstellung über einen Netzwerk-Slice, wobei die Architektur ein Netzwerkelement umfasst, das eine Netzwerkfunktion zum Auswählen eines Netzwerk-Slices in einer Steuerebene eines Funkzugangsnetzwerks ist, das mit einem Kernnetzwerk assoziiert ist, das eine Mehrzahl von Netzwerk-Slices umfasst, wobei die Architektur ferner ein weiteres Netzwerkelement umfasst, das eine Dienstfähigkeitsdarlegungsfunktion, SCEF, ist,
wobei das Netzwerkelement, dass die Netzwerkfunktion ist, ausgelegt ist zum:
• Erhalten (1410) von Informationen in Bezug auf einen oder mehrere Netzwerk-Slices des Kernnetzwerks von der SCEF in Reaktion auf den Empfang einer Beantragungsnachricht von einer Endgerätevorrichtung zum Anfordern eines Dienstes; wobei die Informationen zumindest Anforderungsinformationen umfassen, die eine Anforderung des einen oder der mehreren Netzwerk-Slices eines Drittdienstanbieters zum Bereitstellen des beantragten Dienstes für die Endgerätevorrichtung anzeigen;
• Ermöglichen (1420) von Dienstbereitstellung über das Kernnetzwerk für eine Endgerätevorrichtung im Versorgungsbereich des Funkzugangsnetzwerks durch Informieren der Endgerätevorrichtung über Informationen, die wenigstens auf den erhaltenen Informationen basieren, umfassend
- Auswählen (1421) eines Netzwerk-Slices aus dem einen oder den mehreren Netzwerk-Slices für die Endgerätevorrichtung basierend auf den Anforderungsinformationen des Drittdienstanbieters; und
- Informieren (1422) der Endgerätevorrichtung über den ausgewählten Netzwerk-Slice, und
wobei das weitere Netzwerkelement, dass die SCEF ist, ausgelegt ist zum:
• Sammeln (510) von Status- und Fähigkeitsinformationen über den einen oder die mehreren Netzwerk-Slices des Kernnetzwerks;
• Bestimmen (520) von Netzwerk-Slice-Dienstinformationen basierend auf den gesammelten Status- und Fähigkeitsinformationen;
• Darlegen (530) der Netzwerk-Slice-Dienstinformationen für eine Anwendungsfunktion, die von einem Drittdienstanbieter zum Bereitstellen eines Dienstes für die Endgerätevorrichtung über das Funkzugangsnetzwerk betrieben wird;
• Erhalten (540) von Anforderungsinformationen über die Anforderung für den einen oder die mehreren Netzwerk-Slices des Drittdienstanbieters von der Anwendungsfunktion, welche die Anforderung wenigstens basierend auf den Netzwerk-Slice-Dienstinformationen erzeugt; und
• Senden (550) der Anforderungsinformationen an das Netzwerkelement, das die Netzwerkfunktion ist, so dass das Netzwerkelement, das die Netzwerkfunktion ist, die Anforderungsinformationen erhält, und Auswahl eines Netzwerk-Slice im Funkzugangsnetzwerk für die Endgerätevorrichtung ermöglicht wird.

9. Computerprogrammprodukt, umfassend Anweisungen, die bei Ausführung auf mindestens einem Prozessor den mindestens einen Prozessor zum Durchführen des Verfahrens nach der Ansprüche 1 bis 7 veranlassen.

## Revendications

1. Procédé (1400) dans une architecture pour une prestation de service via une tranche de réseau, l'architecture comprenant un élément de réseau qui est une fonction de réseau pour sélectionner une tranche de réseau dans un plan de commande d'un réseau d'accès radio associé à un réseau central comprenant une pluralité de tranches de réseau, l'architecture comprenant en outre un autre élément de réseau qui est une fonction d'exposition de capacité de service, SCEF, le procédé comprenant :
• l'obtention (1410), par l'élément de réseau qui est la fonction de réseau, en réponse à une réception d'un message de demande depuis un dispositif terminal pour demander un service, d'informations relatives à une ou plusieurs tranches de réseau du réseau central depuis la SCEF ; dans lequel les informations comprennent au moins des informations d'exigence indicatives d'une exigence sur les une ou plusieurs tranches de réseau d'un prestataire de service tiers pour fournir le service demandé au dispositif terminal, dans lequel le procédé, réalisé par la SCEF, comprend en outre :
o la collecte (510) d'informations de statut et de capacité sur les une ou plusieurs tranches de réseau du réseau central ;
o la détermination (520) d'informations de service de réseau tranchées sur la base des informations de statut et de capacité collectées ;
o l'exposition (530) des informations de service de réseau tranchées à une fonction d'application exploitée par un prestataire de service tiers pour fournir un service au dispositif terminal via le réseau d'accès radio ;
o l'obtention (540) d'informations d'exigence sur l'exigence pour une ou plusieurs tranches de réseau du prestataire de service tiers depuis la fonction d'application qui génère l'exigence sur la base au moins des informations de service de réseau tranchées ; et
o la transmission (550) des informations d'exigence à l'élément de réseau qui est la fonction de réseau de sorte que l'élément de réseau qui est la fonction de réseau obtienne les informations d'exigence, et de manière à faciliter une sélection d'une tranche de réseau dans le réseau d'accès radio pour le dispositif terminal ; et
• la facilitation (1420), par l'élément de réseau qui est la fonction de réseau, d'une prestation de service via le réseau central à un dispositif terminal dans le cadre d'une couverture du réseau d'accès radio par la présentation, au dispositif terminal, d'informations qui sont basées au moins sur les informations obtenues, comprenant
- la sélection (1421) d'une tranche de réseau parmi les une ou plusieurs tranches de réseau pour le dispositif terminal sur la base au moins des informations d'exigence du prestataire de service tiers ; et
- la présentation (1422), au dispositif terminal, de la tranche de réseau sélectionnée.

2. Procédé selon la revendication 1, dans lequel
• lesdites informations d'exigence du prestataire de service tiers comprennent au moins l'un parmi : un identifiant d'une tranche de réseau exigée ; un type de la tranche de réseau exigée ; un identifiant d'une tranche de réseau préférée ; et un type de la tranche de réseau préférée.

3. Procédé selon la revendication 2, dans lequel
• lesdites informations d'exigence du prestataire de service tiers comprennent l'une quelconque parmi ce qui suit : des informations sur une condition d'application de la tranche de réseau exigée ou préférée ; des informations sur un sponsor de la tranche de réseau exigée ou préférée ; une liste d'identifiants de dispositifs terminaux qui sont autorisés à accéder à la tranche de réseau exigée ou préférée ; et une description d'un trafic ou d'un service à porter par la tranche de réseau exigée ou préférée.

4. Procédé selon l'une quelconque des revendications précédentes, dans lequel ladite facilitation de prestation de service via le réseau central au dispositif terminal par la présentation, au dispositif terminal, d'informations qui sont basées au moins sur les informations obtenues comprend :
• la diffusion (1423) des informations obtenues au dispositif terminal en tant qu'au moins une partie d'informations de système de sorte que le dispositif terminal puisse sélectionner une tranche de réseau préférée sur la base au moins des informations obtenues.

5. Procédé selon l'une quelconque des revendications précédentes, dans lequel ladite obtention d'informations relatives aux une ou plusieurs tranches de réseau comprend en outre :
• le stockage des informations relatives aux une ou plusieurs tranches de réseau ; et
• la mise à jour des informations stockées en réponse à un changement des tranches de réseau connectées.

6. Procédé selon l'une quelconque des revendications précédentes, dans lequel
• l'élément de réseau qui est la fonction de réseau est une station de base dans le réseau d'accès radio.

7. Procédé selon l'une quelconque des revendications précédentes, comprenant en outre :
• la réalisation, par la SCEF, d'un contrôle d'admission pour l'exigence depuis la fonction d'application ;
• le rejet, par la SCEF, de l'exigence si le contrôle d'admission pour cette exigence échoue ; et
• l'acceptation, par la SCEF, de l'exigence si le contrôle d'admission pour cette exigence réussit.

8. Architecture pour une prestation de service via une tranche de réseau, l'architecture comprenant un élément de réseau qui est une fonction de réseau pour sélectionner une tranche de réseau dans un plan de commande d'un réseau d'accès radio associé à un réseau central comprenant une pluralité de tranches de réseau, l'architecture comprenant en outre un autre élément de réseau qui est une fonction d'exposition de capacité de service, SCEF,
dans lequel l'élément de réseau qui est la fonction de réseau est apte à :
• obtenir (1410), en réponse à une réception d'un message de demande depuis un dispositif terminal pour demander un service, des informations relatives à une ou plusieurs tranches de réseau du réseau central depuis la SCEF ; dans lequel les informations comprennent au moins des informations d'exigence indicatives d'une exigence sur les une ou plusieurs tranches de réseau d'un prestataire de service tiers pour fournir le service demandé au dispositif terminal ; et
• faciliter (1420) une prestation de service via le réseau central à un dispositif terminal dans le cadre d'une couverture du réseau d'accès radio par la présentation, au dispositif terminal, d'informations qui sont basées au moins sur les informations obtenues, comprenant
- la sélection (1421) d'une tranche de réseau parmi les une ou plusieurs tranches de réseau pour le dispositif terminal sur la base au moins des informations d'exigence du prestataire de service tiers ; et
- la présentation (1422), au dispositif terminal, de la tranche de réseau sélectionnée, et
dans lequel l'autre élément de réseau qui est la SCEF est apte à :
• collecter (510) des informations de statut et de capacité sur les une ou plusieurs tranches de réseau du réseau central ;
• déterminer (520) des informations de service de réseau tranchées sur la base des informations de statut et de capacité collectées ;
• exposer (530) les informations de service de réseau tranchées à une fonction d'application exploitée par un prestataire de service tiers pour fournir un service au dispositif terminal via le réseau d'accès radio ;
• obtenir (540) des informations d'exigence sur l'exigence pour une ou plusieurs tranches de réseau du prestataire de service tiers depuis la fonction d'application qui génère l'exigence sur la base au moins des informations de service de réseau tranchées ; et
• transmettre (550) les informations d'exigence à l'élément de réseau qui est la fonction de réseau de sorte que l'élément de réseau qui est la fonction de réseau obtienne les informations d'exigence, et de manière à faciliter une sélection d'une tranche de réseau dans le réseau d'accès radio pour le dispositif terminal.

9. Produit de programme d'ordinateur, comprenant des instructions qui, lorsqu'elles sont exécutées sur au moins un processeur, amènent l'au moins un processeur à réaliser le procédé selon l'une quelconque des revendications 1 à 7.
